# EUROPEAN PATENT APPLICATION

(11) **EP 4 694 549 A1**
(43) Date of publication of application: **11.02.2026**
(21) Application number: 24830060.0
(22) Date of filing: 09.04.2024
(51) Int. Cl.: H04W 76/14

(54) **CONNECTING METHOD AND APPARATUS FOR BLUETOOTH HEARING AID, AND ELECTRONIC DEVICE**

(30) Priority: 28.06.2023 CN 202310780952
(71) Applicant: Honor Device Co., Ltd., Shenzhen, Guangdong 518040 (CN)
(72) Inventor: SUO, Yayun, Shenzhen, Guangdong 518040 (CN)
(74) Representative: Goddar, Heinz J.
(86) International application number: PCT/CN2024/086873
(87) International publication number: WO 2025/001410

(57) **Abstract**

This application provides a method for connecting a Bluetooth hearing aid, an electronic device, and an apparatus. The method includes: after receiving a BLE broadcast packet sent by a peripheral device, if a notification packet does not include first information and second information, determining a device type of the peripheral device based on third information in a scan response frame or fourth information, where the first information and the second information are respectively configured to indicate the device type and a left-ear identifier or a right-ear identifier, the third information is at least one piece of information indicating the device type and information indicating the left-ear identifier or the right-ear identifier, and the fourth information is located in the notification packet and/or the scan response frame and configured to indicate a service supported by the peripheral device; and if the device type of the peripheral device is a Bluetooth hearing aid, connecting the Bluetooth hearing aid. This resolves, in the conventional technologies, a problem that an electronic device is difficult to be connected to the Bluetooth hearing aid because the electronic device cannot recognize a device type of the Bluetooth hearing aid.

## Description

### TECHNICAL FIELD

This application belongs to the field of communication technologies, and in particular, to a method for connecting a Bluetooth hearing aid, an electronic device, and an apparatus.

### BACKGROUND

A Bluetooth hearing aid is a hearing aid that has a Bluetooth function. An audio signal sent from a mobile phone or another electronic device supporting a Bluetooth function is received by the Bluetooth hearing aid via Bluetooth and may be transmitted to the Bluetooth hearing aid, to help a user wearing the Bluetooth hearing aid to hear a corresponding audio signal.

Audio streaming for hearing aid (audio streaming for hearing aid, ASHA) is a hearing aid protocol proprietary to the Bluetooth hearing aid. In the case of the application of this protocol, an electronic device may receive, in the process of searching for the Bluetooth hearing aid, a notification packet in a bluetooth low power (bluetooth low energy, BLE) broadcast packet sent by the Bluetooth hearing aid, and may recognize a device type based on the notification packet, to implement a connection to the Bluetooth hearing aids. Therefore, an audio signal sent by the electronic device can be transmitted to the Bluetooth hearing aid after a connection.

However, some of fields in the notification packet are sometimes missing. As a result, the electronic device cannot accurately recognize whether a transmitting end of the notification packet is the Bluetooth hearing aid. This further results in difficulties in a connection between the electronic device and the Bluetooth hearing aid.

### SUMMARY

To resolve, in the conventional technologies, a problem that an electronic device is difficult to be connected to a Bluetooth hearing aid because the electronic device cannot recognize a device type of the Bluetooth hearing aid, embodiments of this application provide a method for connecting a Bluetooth hearing aid and an apparatus.

According to a first aspect, an embodiment of this application provides a method for connecting a Bluetooth hearing aid. The method is applied to an electronic device, and includes:
receiving a Bluetooth low power BLE broadcast packet sent by a peripheral device, where the BLE broadcast packet includes a notification packet and a scan response frame;
if the notification packet does not include first information and second information, determining a device type of the peripheral device based on third information in the scan response frame or fourth information, where the first information and the second information are respectively configured to indicate the device type and a left-ear identifier or a right-ear identifier, the third information is at least one piece of information indicating the device type and information indicating the left-ear identifier or the right-ear identifier, and the fourth information is located in the notification packet and/or the scan response frame and configured to indicate a service supported by the peripheral device; and
if the device type of the peripheral device is a Bluetooth hearing aid, connecting the Bluetooth hearing aid.

When the notification packet does not include the information indicating the device type and the information indicating the left-ear identifier or the right-ear identifier, whether the peripheral device is the Bluetooth hearing aid can be determined through the method, and when it is determined that the peripheral device is the Bluetooth hearing aid, the Bluetooth hearing aid can be connected. This resolves, in the conventional technologies, a problem that the electronic device is difficult to be connected to the Bluetooth hearing aid because the electronic device cannot recognize the device type of the Bluetooth hearing aid.

In an optional design, the determining a device type of the peripheral device based on fourth information includes:
if the fourth information indicates that the service supported by the peripheral device includes a volume adjustment service of a hearing aid, determining that the device type of the peripheral device is the Bluetooth hearing aid;
if the fourth information indicates that the service supported by the peripheral device includes an audio control point service, determining that the device type of the peripheral device is the Bluetooth hearing aid; or
if the fourth information indicates that the service supported by the peripheral device includes a status report of an audio control point, determining that the device type of the peripheral device is the Bluetooth hearing aid.

Through the method, whether the peripheral device is the Bluetooth hearing aid can be recognized based on different types of fourth information.

In an optional design, after the determining a device type of the peripheral device, the method further includes:
if the device type of the peripheral device is the Bluetooth hearing aid and the third information in the scan response frame includes the left-ear identifier or the right-ear identifier, determining, based on the left-ear identifier or the right-ear identifier, a left ear or a right ear corresponding to the Bluetooth hearing aid; and
if the Bluetooth hearing aid is not paired in advance, displaying, on a search page of the Bluetooth hearing aid, a left-ear icon or a right-ear icon corresponding to the Bluetooth hearing aid.

Through the method, when it is determined that the peripheral device is the Bluetooth hearing aid, the left ear or the right ear corresponding to the Bluetooth hearing aid can be further determined based on the left-ear identifier or the right-ear identifier included in the scan response frame, and a corresponding icon can be displayed on the search page, to prompt a user.

In an optional design, after the determining a device type of the peripheral device, the method further includes:
if the device type of the peripheral device is the Bluetooth hearing aid and the third information in the scan response frame includes the left-ear identifier or the right-ear identifier, determining, based on the left-ear identifier or the right-ear identifier, the left ear or the right ear corresponding to the Bluetooth hearing aid; and
after connecting the Bluetooth hearing aid, displaying, on a connection page of the Bluetooth hearing aid, the left-ear icon or the right-ear icon corresponding to the Bluetooth hearing aid.

Through the method, when it is determined that the peripheral device is the Bluetooth hearing aid, the left ear or the right ear corresponding to the Bluetooth hearing aid can be further determined based on the left-ear identifier or the right-ear identifier included in the scan response frame, and a corresponding icon can be displayed on the connection page, to prompt the user.

In an optional design, the connecting the Bluetooth hearing aid includes:
if the Bluetooth hearing aid is paired in advance, directly connecting the Bluetooth hearing aid;
   or,
if the Bluetooth hearing aid is not paired in advance, displaying an icon of the Bluetooth hearing aid on the search page; and
after receiving a connection operation for the search page, connecting the Bluetooth hearing aid.

Through the method, when being paired with the Bluetooth hearing aid in advance, the electronic device can be directly connected to the Bluetooth hearing aid, to improve efficiency of connecting the Bluetooth hearing aid. In addition, when the electronic device is not paired with the Bluetooth hearing aid in advance, the Bluetooth hearing aid can be connected based on the connection operation on the search page, to meet requirements for the user to use the Bluetooth hearing aid.

According to a second aspect, an embodiment of this application provides a method for connecting a Bluetooth hearing aid. The method is applied to an electronic device, and includes:
receiving a Bluetooth low power BLE broadcast packet sent by a peripheral device, where the BLE broadcast packet includes a notification packet;
if the notification packet does not include first information and second information, determining a device type of the peripheral device based on a device name indicated by the BLE broadcast packet, where the first information and the second information are respectively configured to indicate the device type and a left-ear identifier or a right-ear identifier; and
if the device type of the peripheral device is a Bluetooth hearing aid, connecting the Bluetooth hearing aid.

When the notification packet does not include the information indicating the device type and the information indicating the left-ear identifier or the right-ear identifier, whether the peripheral device is the Bluetooth hearing aid can be determined through the method, and when it is determined that the peripheral device is the Bluetooth hearing aid, the Bluetooth hearing aid can be connected. This resolves, in the conventional technologies, a problem that the electronic device is difficult to be connected to the Bluetooth hearing aid because the electronic device cannot recognize the device type of the Bluetooth hearing aid.

In an optional design, after the determining a device type of the peripheral device, the method further includes:
if the device type of the peripheral device is the Bluetooth hearing aid and the BLE broadcast packet further includes a scan response frame, determining, based on a left-ear identifier or a right-ear identifier in the scan response frame, a left ear or a right ear corresponding to the Bluetooth hearing aid; and
if the Bluetooth hearing aid is not paired in advance, displaying, on a search page of the Bluetooth hearing aid, a left-ear icon or a right-ear icon corresponding to the Bluetooth hearing aid.

In an optional design, after the determining a device type of the peripheral device, the method further includes:
if the device type of the peripheral device is the Bluetooth hearing aid and the BLE broadcast packet further includes a scan response frame, determining, based on a left-ear identifier or a right-ear identifier in the scan response frame, a left ear or a right ear corresponding to the Bluetooth hearing aid; and
after connecting the Bluetooth hearing aid, displaying, on a connection page of the Bluetooth hearing aid, the left-ear icon or the right-ear icon corresponding to the Bluetooth hearing aid.

In an optional design, the connecting the Bluetooth hearing aid includes:
if the Bluetooth hearing aid is paired in advance, directly connecting the Bluetooth hearing aid;
   or,
if the Bluetooth hearing aid is not paired in advance, displaying an icon of the Bluetooth hearing aid on the search page; and
after receiving a connection operation for the search page, connecting the Bluetooth hearing aid.

According to a third aspect, an embodiment of this application provides a method for connecting a Bluetooth hearing aid. The method is applied to an electronic device, and includes:
receiving a Bluetooth low power BLE broadcast packet sent by a peripheral device, where the BLE broadcast packet includes a notification packet;
if the notification packet does not include first information and second information, matching an address of the peripheral device with an address of the Bluetooth hearing aid included in historical connection information; and
if the address of the peripheral device is matched with the address of the Bluetooth hearing aid included in the historical connection information, connecting the peripheral device.

When the notification packet does not include the information indicating the device type and the information indicating the left-ear identifier or the right-ear identifier, whether the peripheral device is the Bluetooth hearing aid can be determined through the method, and when it is determined that the peripheral device is the Bluetooth hearing aid, the Bluetooth hearing aid can be connected. This resolves, in the conventional technologies, a problem that the electronic device is difficult to be connected to the Bluetooth hearing aid because the electronic device cannot recognize the device type of the Bluetooth hearing aid.

In an optional design, the matching an address of the peripheral device with an address of the Bluetooth hearing aid included in historical connection information includes:
determining target connection information in the historical connection information, where a difference between a time point corresponding to the target connection information and a time point when receiving the BLE broadcast packet is in a preset range; and
matching the address of the peripheral device with the address of the Bluetooth hearing aid included in the target connection information.

Through the method, only the address of the peripheral device needs to be matched with the address of the Bluetooth hearing aid included in the target connection information. This reduces a matching operation and improves efficiency of connecting the Bluetooth hearing aid.

In an optional design, after the matching an address of the peripheral device with an address of the Bluetooth hearing aid included in historical connection information, the method further includes:
if the address of the peripheral device is matched with the address of the Bluetooth hearing aid included in the historical connection information and the BLE broadcast packet further includes a scan response frame, determining, based on a left-ear identifier or a right-ear identifier included in the scan response frame, a left ear or a right ear corresponding to the Bluetooth hearing aid; and
after connecting the Bluetooth hearing aid, displaying, on a connection page of the Bluetooth hearing aid, a left-ear icon or a right-ear icon corresponding to the Bluetooth hearing aid.

According to a fourth aspect, an embodiment of this application provides a method for connecting a Bluetooth hearing aid. The method is applied to an electronic device, and includes:
receiving a Bluetooth low power BLE broadcast packet sent by a peripheral device, where the BLE broadcast packet includes a notification packet and a scan response frame;
determining a device type of the peripheral device based on first information included in the notification packet, where the first information is configured to indicate the device type;
if the notification packet does not include second information and the device type of the peripheral device is a Bluetooth hearing aid, determining a left ear or a right ear of the Bluetooth hearing aid based on a left-ear identifier or a right-ear identifier included in the scan response frame, where the second information is configured to indicate the left-ear identifier or the right-ear identifier; and
connecting the Bluetooth hearing aid, and displaying, on a connection page of the Bluetooth hearing aid, a left-ear icon or a right-ear icon corresponding to the Bluetooth hearing aid.

When the notification packet does not include the information indicating the device type and the information indicating the left-ear identifier or the right-ear identifier, whether the peripheral device is the Bluetooth hearing aid can be determined through the method, and when it is determined that the peripheral device is the Bluetooth hearing aid, the Bluetooth hearing aid can be connected. This resolves, in the conventional technologies, a problem that the electronic device is difficult to be connected to the Bluetooth hearing aid because the electronic device cannot recognize the device type of the Bluetooth hearing aid.

According to a fifth aspect, an embodiment of this application provides a method for connecting a Bluetooth hearing aid. The method is applied to an electronic device, and includes:
receiving a Bluetooth low power BLE broadcast packet sent by a peripheral device, where the BLE broadcast packet includes a notification packet and a scan response frame;
if a notification packet does not include first information and second information, after determining, based on third information in a scan response frame, that the peripheral device is a Bluetooth hearing aid, connecting the Bluetooth hearing aid, where the first information and the second information are respectively configured to indicate the device type and a left-ear identifier or a right-ear identifier, the third information is at least one piece of information indicating the device type and information indicating the left-ear identifier or the right-ear identifier;
if a scan response frame does not include third information, after determining, based on fourth information, that a peripheral device is a Bluetooth hearing aid, connecting the Bluetooth hearing aid, where the fourth information is located in a notification packet and/or the scan response frame and configured to indicate a service supported by the peripheral device;
if neither a notification packet nor a scan response frame includes fourth information, after determining, based on a device name indicated by a BLE broadcast packet, that a peripheral device is a Bluetooth hearing aid, connecting the Bluetooth hearing aid; or
if a BLE broadcast packet does not include a device name, after determining that an address of a peripheral device is matched with an address of a Bluetooth hearing aid included in historical connection information, connecting the peripheral device.

When the notification packet does not include the information indicating the device type and the information indicating the left-ear identifier or the right-ear identifier, whether the peripheral device is the Bluetooth hearing aid can be determined through the method, and when it is determined that the peripheral device is the Bluetooth hearing aid, the Bluetooth hearing aid can be connected. This resolves, in the conventional technologies, a problem that the electronic device is difficult to be connected to the Bluetooth hearing aid because the electronic device cannot recognize the device type of the Bluetooth hearing aid.

In an optional design, the method further includes:
determining, based on a left-ear identifier or a right-ear identifier included in the scan response frame, a left ear or a right ear corresponding to the Bluetooth hearing aid; and
displaying, on a search page and/or a connection page of the Bluetooth hearing aid, a left-ear icon or a right-ear icon corresponding to the Bluetooth hearing aid.

According to a sixth aspect, an embodiment of this application provides an electronic device, including:
a receiving module, a device recognition module, and a connection module;
the receiving module is configured to receive a Bluetooth low power BLE broadcast packet sent by a peripheral device, where the BLE broadcast packet includes a notification packet and a scan response frame; and
if the notification packet does not include first information and second information, the device recognition module is configured to determine a device type of the peripheral device based on third information in the scan response frame or fourth information, where the first information and the second information are respectively configured to indicate the device type and a left-ear identifier or a right-ear identifier, the third information is at least one piece of information indicating the device type and information indicating the left-ear identifier or the right-ear identifier, and the fourth information is located in the notification packet and/or the scan response frame and configured to indicate a service supported by the peripheral device; and
if the device type of the peripheral device is a Bluetooth hearing aid, the connection module is configured to connect the Bluetooth hearing aid.

According to a seventh aspect, an embodiment of this application provides an electronic device, including:
a receiving module, a device recognition module, and a connection module;
the receiving module is configured to receive a Bluetooth low power BLE broadcast packet sent by a peripheral device, where the BLE broadcast packet includes a notification packet;
if the notification packet does not include first information and second information, the device recognition module is configured to determine a device type of the peripheral device based on a device name indicated by the BLE broadcast packet, where the first information and the second information are respectively configured to indicate the device type and a left-ear identifier or a right-ear identifier; and
if the device type of the peripheral device is a Bluetooth hearing aid, the connection module is configured to connect the Bluetooth hearing aid.

According to an eighth aspect, an embodiment of this application provides an electronic device, including:
a receiving module, a device recognition module, and a connection module;
the receiving module is configured to receive a Bluetooth low power BLE broadcast packet sent by a peripheral device, where the BLE broadcast packet includes a notification packet;
if the notification packet does not include first information and second information, the device recognition module is configured to match an address of the peripheral device with an address of a Bluetooth hearing aid included in historical connection information; and
if a device type of the peripheral device is the Bluetooth hearing aid, the connection module is configured to connect the Bluetooth hearing aid.

According to a ninth aspect, an embodiment of this application provides an electronic device, including:
a receiving module, a device recognition module, and a connection module;
the receiving module is configured to receive a Bluetooth low power BLE broadcast packet sent by a peripheral device, where the BLE broadcast packet includes a notification packet and a scan response frame; and
the device recognition module is configured to determine a device type of the peripheral device based on first information included in the notification packet, and the first information is configured to indicate the device type;
if the notification packet does not include second information and the device type of the peripheral device is a Bluetooth hearing aid, the device recognition module is further configured to determine a left ear or a right ear of the Bluetooth hearing aid based on a left-ear identifier or a right-ear identifier included in the scan response frame, and the second information is configured to indicate the left-ear identifier or the right-ear identifier; and
the connection module is configured to connect the Bluetooth hearing aid, and display, on a connection page of the Bluetooth hearing aid, a left-ear icon or a right-ear icon corresponding to the Bluetooth hearing aid.

According to a tenth aspect, an embodiment of this application provides an electronic device, including:
a receiving module, a device recognition module, and a connection module;
the receiving module is configured to receive a Bluetooth low power BLE broadcast packet sent by a peripheral device, where the BLE broadcast packet includes a notification packet and a scan response frame; and
if the notification packet does not include first information and second information, after the device recognition module determines that the peripheral device is a Bluetooth hearing aid based on third information in the scan response frame, the connection module is configured to connect the Bluetooth hearing aid, where the first information and the second information are respectively configured to indicate a device type and a left-ear identifier or a right-ear identifier, and the third information is at least one piece of information indicating the device type and information indicating the left-ear identifier or the right-ear identifier;
if the scan response frame does not include third information, after the device recognition module determines that the peripheral device is a Bluetooth hearing aid based on fourth information, the connection module is configured to connect the Bluetooth hearing aid, and the fourth information is located in the notification packet and/or the scan response frame and configured to indicate a service supported by the peripheral device;
if neither the notification packet nor the scan response frame includes fourth information, after the device recognition module determines that the peripheral device is a Bluetooth hearing aid based on a device name indicated by the BLE broadcast packet, the connection module is configured to connect the Bluetooth hearing aid; or
if the BLE broadcast packet does not include a device name, after the device recognition module determines that an address of the peripheral device is matched with an address of a Bluetooth hearing aid included in historical connection information, the connection module is configured to connect the peripheral device.

According to an eleventh aspect, an embodiment of this application provides an electronic device, including a processor and a memory, where the memory stores program instructions, and when the processor executes the program instructions, the electronic device is enabled to perform the method according to any one of the first aspect to the fifth aspect.

According to a twelfth aspect, an embodiment of this application provides a computer-readable storage medium, where the computer-readable storage medium stores a computer program or instructions, and when the computer program or the instructions are executed, the method is performed according to any one of the first aspect to the fifth aspect.

According to a thirteenth aspect, an embodiment of this application provides a chip system, where the chip system includes a processor, the processor is coupled to a memory and configured to execute a computer program or instructions stored in the memory, and when the computer program or the instructions are executed, the method is performed according to any one of the first aspect to the fifth aspect.

In the solutions provided in embodiments of this application, when the notification packet does not include the information indicating the device type and the information indicating the left-ear identifier or the right-ear identifier, whether the peripheral device is the Bluetooth hearing aid can be determined through the method, and when it is determined that the peripheral device is the Bluetooth hearing aid, the Bluetooth hearing aid can be connected. This resolves, in the conventional technologies, a problem that the electronic device is difficult to be connected to the Bluetooth hearing aid because the electronic device cannot recognize the device type of the Bluetooth hearing aid.

In addition, in the conventional technologies, whether the Bluetooth hearing aid corresponds to the left ear or the right ear is determined based on the second information included in the notification packet. If the notification packet does not include the second information, whether the Bluetooth hearing aid corresponds to the left ear or the right ear cannot be recognized.

In the solutions provided in embodiments of this application, after it is determined that the peripheral device is the Bluetooth hearing aid, whether the Bluetooth hearing aid corresponds to the left ear or the right ear may be recognized based on the left-ear identifier or the right-ear identifier in the scan response frame, to resolve the problem.

In addition, in the solutions, the left-ear icon or the right-ear icon corresponding to the Bluetooth hearing aid may be displayed on the search page and/or the connection page of the Bluetooth hearing aid, so that the user can understand, based on the icon on the search page and/or the connection page, the left ear or the right ear corresponding to the Bluetooth hearing aid. In addition, in the solutions, if the user needs to wear the Bluetooth hearing aid in one ear, the user can select a required Bluetooth hearing aid based on the icon, to improve wearing experience of the user.

### BRIEF DESCRIPTION OF THE DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1A is a schematic diagram of a connection page of an electronic device;
FIG. 1B is a schematic diagram of a search page of an electronic device;
FIG. 1C is a schematic diagram of a reminder page of an electronic device;
FIG. 2 is a schematic diagram of a structure of an electronic device according to an embodiment of this application;
FIG. 3 is a schematic working flowchart of a method for connecting a Bluetooth hearing aid according to an embodiment of this application;
FIG. 4 is another schematic working flowchart of a method for connecting a Bluetooth hearing aid according to an embodiment of this application;
FIG. 5A is a schematic diagram of a search page of an electronic device according to an embodiment of this application;
FIG. 5B is a schematic diagram of a connection page of an electronic device according to an embodiment of this application;
FIG. 6 is another schematic working flowchart of a method for connecting a Bluetooth hearing aid according to an embodiment of this application;
FIG. 7 is another schematic working flowchart of a method for connecting a Bluetooth hearing aid according to an embodiment of this application;
FIG. 8 is another schematic working flowchart of a method for connecting a Bluetooth hearing aid according to an embodiment of this application;
FIG. 9 is another schematic working flowchart of a method for connecting a Bluetooth hearing aid according to an embodiment of this application;
FIG. 10 is another schematic working flowchart of a method for connecting a Bluetooth hearing aid according to an embodiment of this application;
FIG. 11 is a schematic diagram of a structure of an electronic device according to an embodiment of this application; and
FIG. 12 is a schematic diagram of a structure of an electronic device according to an embodiment of this application;

### DETAILED DESCRIPTION OF EMBODIMENTS

Technical solutions in embodiments of this application are described below with reference to the accompanying drawings in embodiments of this application.

Terms used in the following embodiments are only intended to describe particular embodiments, and are not intended to limit this application. As used in this specification and the claims of this application, a singular expression form, "one", "a", "said", "foregoing", "the", or "this", is intended to also include an expression form such as "one or more", unless clearly indicated to the contrary in the context. It should be further understood that, in the following embodiments of this application, "at least one" and "one or more" mean one, two, or more than two. The term "and/or" is used for describing an association relationship between associated objects, and indicates that three relationships may be present. For example, A and/or B may indicate the presence of the following three conditions: only A, both A and B, and only B, where A and B may be singular or plural. The character "/" usually indicates an "or" relationship between the associated objects.

Reference like "one embodiment" or "some embodiments" described in this specification means that a particular characteristic, structure, or feature described with reference to one or more embodiments is included in the one or more embodiments of this application. Therefore, statements "in one embodiment", "in some embodiments", "in some other embodiments", "in other embodiments", and the like appear in different places in this specification do not necessarily refer to the same embodiment, but mean "one or more but not all embodiments", unless otherwise specified in other ways. Terms "include", "include", "have", and variations thereof all mean "including but not limited to", unless otherwise specified.

To describe the following embodiments clearly and concisely, brief descriptions for related technologies are as follows.

A Bluetooth hearing aid is a hearing aid that has a Bluetooth function. An audio signal sent from a mobile phone or another electronic device supporting a Bluetooth function is received by the Bluetooth hearing aid via Bluetooth and may be transmitted to the Bluetooth hearing aid, to help a user wearing the Bluetooth hearing aid to hear a corresponding audio signal.

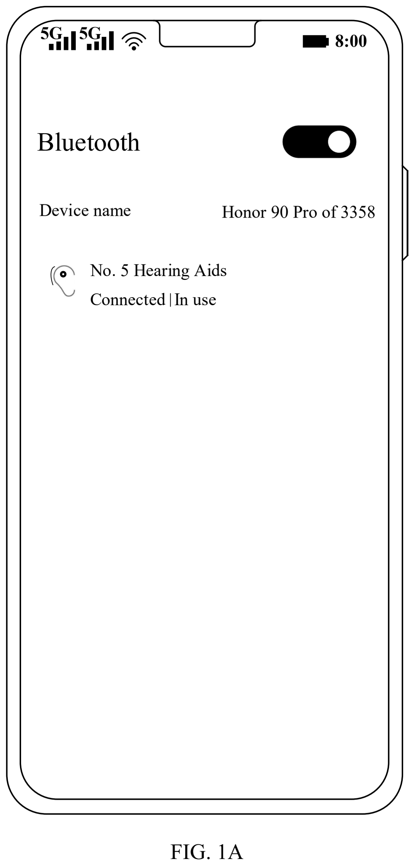

If the Bluetooth hearing aid needs to be applied, the electronic device usually needs to undergo two phases, namely, a search phase and a connection phase. In the search phase, the electronic device searches for a data packet sent by the Bluetooth hearing aid, recognizes, based on the data packet, that a transmitting end of the data packet is the Bluetooth hearing aid, and implements a connection to the Bluetooth hearing aid in the connection phase, to transmit the audio signal to the Bluetooth hearing aid by means of this connection. After the electronic device is connected to the Bluetooth hearing aid, an interface of the electronic device may be shown in FIG. 1A. The interface indicates that the electronic device has been connected to "No. 5 Hearing Aids". Specifically, the interface indicates that a currently connected peripheral device is the Bluetooth hearing aid by using an ear-shaped icon on a left side of a field of "No. 5 Hearing Aids".

In addition, FIG. 1A is only an example. In an actual application scenario, the interface indicates that the currently connected peripheral device is the Bluetooth hearing aid by using other forms of icons.

An ASHA protocol is a proprietary protocol to the Bluetooth hearing aid. When the protocol is applied, in the search phase, the electronic device may receive a BLE broadcast packet sent by the Bluetooth hearing aid. The BLE broadcast packet includes a notification packet and a scan response (scan response) frame. The electronic device usually recognizes a device type based on an audio streaming for hearing aid universally unique identifier (audio streaming for hearing aid universally unique identifier, ASHA UUID) included in the notification packet.

However, sometimes the notification packet does not include the ASHA UUID. In this case, after receiving the BLE broadcast packet, the electronic device cannot recognize, based on the notification packet in the BLE broadcast packet, whether the peripheral device is the Bluetooth hearing aid.

If the electronic device cannot recognize, based on the notification packet, whether the peripheral device is the Bluetooth hearing aid, there are usually two cases as follows:

(Case 1) Even if the peripheral device is the Bluetooth hearing aid, the electronic device cannot be connected to the Bluetooth hearing aid.

In this case, the electronic device cannot recognize whether the peripheral device is the Bluetooth hearing aid. Therefore, even if the peripheral device is the Bluetooth hearing aid, the electronic device cannot be connected to the Bluetooth hearing aid.

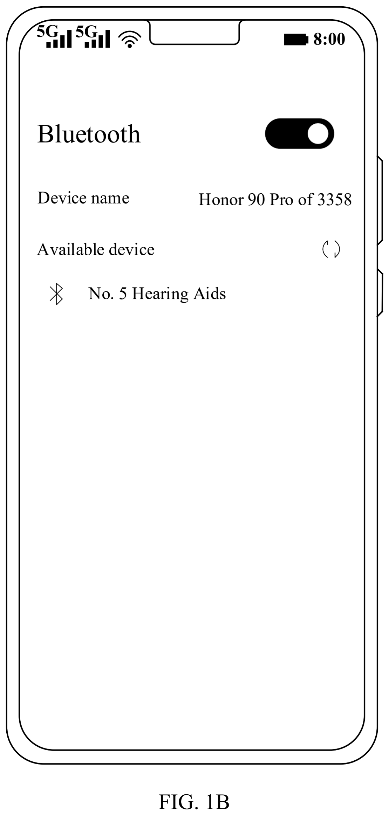

Because the electronic device cannot recognize the device type of the peripheral device, the electronic device may not display the corresponding device type of the peripheral device on the search interface in the search phase. In an example, FIG. 1B illustrates a schematic diagram of the interface of the electronic device in the search phase. In the interface, the icon on the left side of "No. 5 Hearing Aids" is a Bluetooth icon, and only indicates that a device obtained through searching is a Bluetooth-enabled device, but cannot indicate that the device is the Bluetooth hearing aid.

Further, in the search phase, if the electronic device only displays the Bluetooth icon for the peripheral device, the user may sometimes perform an operation (for example, tapping "No. 5 Hearing Aids" displayed in the interface) on the interface of the electronic device, expecting the electronic device to display the device type of the peripheral device, and then the user determines, based on the device type, whether the peripheral device needs to be connected. However, because the electronic device cannot accurately recognize the type of the peripheral device, the electronic device may not display the device type of the peripheral device even if receiving the user operation, and may usually only display a reminder for pairing.

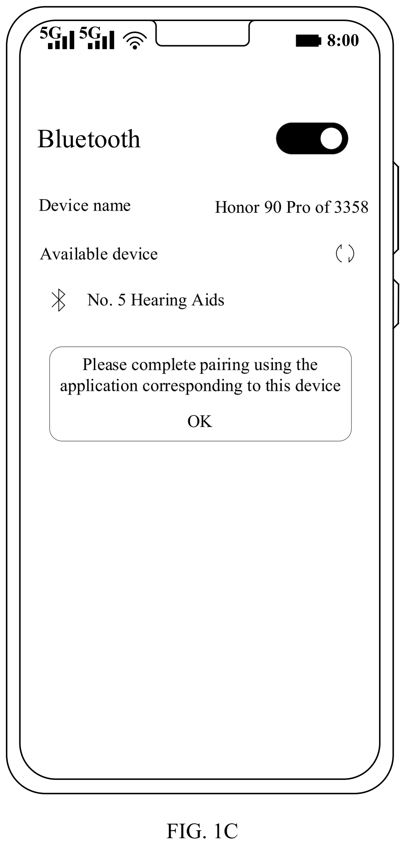

In an example, the reminder displayed by the electronic device may be as shown in FIG. 1C. Refer to the interface. After receiving the user operation, the electronic device may display a pop-up window. The pop-up window includes a reminder of "Please complete pairing using the application corresponding to this device". Specifically, the device type of the peripheral device cannot be displayed.

In this case, when receiving an operation of removing the reminder, the electronic device often does not continue to display the reminder, and may not perform a connection operation. Therefore, the peripheral device is not connected.

For example, in an example corresponding to FIG. 1C, after receiving a touch operation of displaying "Got it" underneath "Please complete pairing using the application corresponding to this device", the electronic device does not continue to display the pop-up reminder and does not perform the connection operation. Therefore, the peripheral device is not connected.

(Case 2) The electronic device downloads a corresponding application based on a user operation, and connects the peripheral device based on a user operation of downloading the application.

Some electronic devices provide, for some peripheral devices, applications that may be paired. In this case, because the electronic device cannot recognize the device type of the peripheral device, the search page of the electronic device does not display related information indicating the device type, and the user needs to obtain the device type of the peripheral device based on experience or by other means, and then operate the electronic device. The electronic device downloads, based on the user operation, an application corresponding to the device type. After downloading the application, the electronic device may perform, based on the received user operation for the application, pairing with the peripheral device, to implement a connection between the electronic device and the peripheral device.

However, if the user determines that the device type of the peripheral device is wrong, the application downloaded by the electronic device is not matched with the peripheral device, resulting in a failure to connect the peripheral device.

That is, in this case, the electronic device needs to download the corresponding application based on several operations of the user to implement the connection to the peripheral device. Therefore, operations are cumbersome, and there is possibility of failing to connect the peripheral device.

In other words, in the conventional technologies, because the notification packet in the BLE broadcast packet usually does not include the ASHA UUID, whether the peripheral device is the Bluetooth hearing aid cannot be recognized. As a result, the electronic device cannot be connected to the peripheral device, or a process of connecting the electronic device to the peripheral device is cumbersome, that is, the electronic device is difficult to be connected to the peripheral device.

Further, when the ASHA protocol is applied, the notification packet may further include a corresponding left-ear identifier or a corresponding right-ear identifier. If the Bluetooth hearing aid is adapted for wearing in a left ear of the user, the notification packet may include the left-ear identifier. If the Bluetooth hearing aid is adapted for wearing in a right ear of the user, the notification packet may include the right-ear identifier. In this case, after receiving the notification packet, the electronic device may further display an icon for indicating the left ear or the right ear. Therefore, the user can wear the Bluetooth hearing aid in an appropriate ear based on the icon. Alternatively, when the user needs to select only one Bluetooth hearing aid, the user may select, based on the icon, an appropriate Bluetooth hearing aid for wearing.

However, the notification packet sometimes does not include the left-ear identifier or the right-ear identifier. As a result, the electronic device cannot recognize, based on the notification packet, whether the Bluetooth hearing aid is adapted for wearing in a left ear or a right ear.

To resolve the foregoing technical problem, embodiments of this application provide a method for connecting a Bluetooth hearing aid and an apparatus.

The method may be performed by an electronic device. The electronic device can support a Bluetooth function, can implement a Bluetooth connection to a peripheral device, and can transmit data to a peripheral device using the Bluetooth connection. In a possible design, the electronic device may be a wireless terminal, a vehicle-mounted wireless terminal, a portable device, a wearable device, a mobile phone (or referred to as a "cellular" phone), a portable terminal, a pocket terminal, a handheld terminal, and the like. For example, the electronic device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), an access terminal (access terminal), a user terminal (user terminal), a user agent (user agent), a user device (user device), user equipment (user equipment, UE), or the like. A type of the electronic device is not limited in this application.

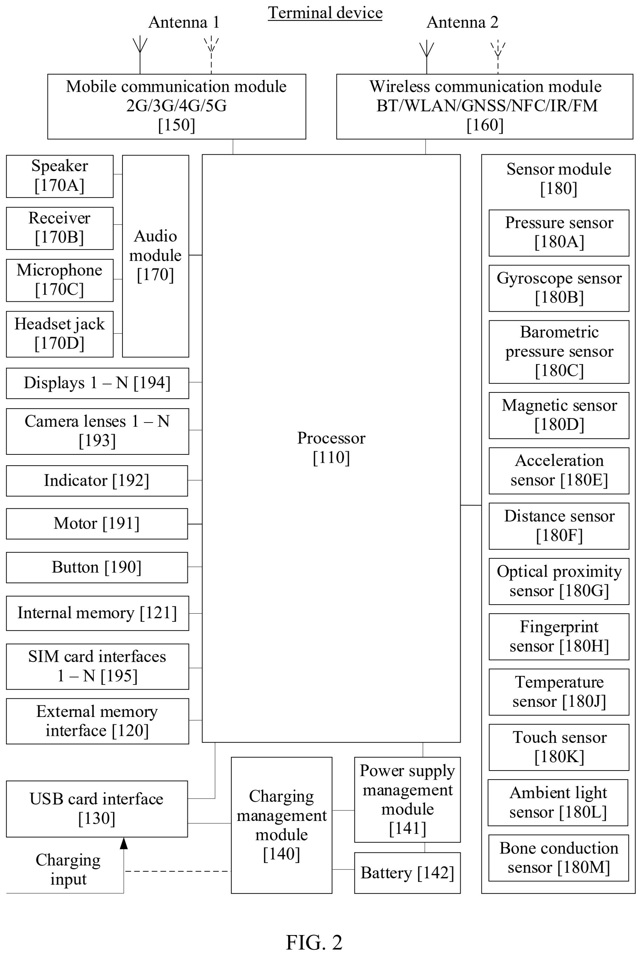

An example in which a mobile phone is the electronic device is used for description. In this embodiment, a structure of the electronic device may be shown in FIG. 2. FIG. 2 is a schematic diagram of a structure of an electronic device to which a method for connecting a Bluetooth hearing aid is applied according to an embodiment of this application.

As shown in FIG. 2, an electronic device may include a processor 110, an external memory interface 120, an internal memory 121, a universal serial bus (universal serial bus, USB) interface 130, a charging management module 140, a power management module 141, a battery 142, a sensor module 180, a button 190, a motor 191, an indicator 192, a camera 193, a display screen 194, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

Further, when the electronic device is a mobile phone, the electronic device may further include an antenna 1, an antenna 2, a mobile communication module 150, a wireless communication module 160, an audio module 170, a speaker 170A, a receiver 170B, a microphone 170C, a headset jack 170D, a subscriber identification module (subscriber identification module, SIM) card interface 195, and the like.

It may be understood that, a structure illustrated in this embodiment does not constitute a specific limitation on the electronic device. In some other embodiments, the electronic device may include more or fewer components than those shown in the figure, or some components may be combined, or some components may be split, or a different component arrangement may be used. The components in the figure may be implemented by hardware, software, or a combination of software and hardware.

The processor 110 may include one or more processing units, and different processing units may be separate components or may be integrated into one or more processors. A memory may also be disposed in the processor 110, and is configured to store instructions and data.

In some embodiments, the processor 110 may include one or more interfaces. The interface may include an integrated circuit (inter-integrated circuit, I2C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive charging input from the charger. The power management module 141 is configured to connect to the battery 142, the charging management module 140 and the processor 110. The power management module 141 receives an input from the battery 142 and/or the charging management module 140 and supplies power to the processor 110, the internal memory 121, the display screen 194, the camera 193, the wireless communication module 160, and the like.

The mobile communication module 150 may provide a wireless communication solution that includes 2G/3G/4G/5G or the like and that is applied to the electronic device. The wireless communication module 160 may provide a wireless communication solution that is applied to the electronic device and that includes wireless local area networks (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. In some embodiments, in the electronic device, the antenna 1 is coupled to the mobile communication module 150, and the antenna 2 is coupled to the wireless communication module 160, so that the electronic device may communicate with a network and another device by using a wireless communication technology.

The electronic device implements a display function by using a graphics processing unit (graphics processing unit GPU), the display screen 194, the application processor, and the like. The GPU is a microprocessor for image processing and connects the display screen 194 to the application processor. The GPU is configured to perform mathematical and geometric computing for graphics rendering. The processor 110 may include one or more GPUs, and the GPU executes program instructions to generate or change displayed information.

The display screen 194 is configured to display an image, a video, or the like. The display screen 194 may include a display panel. A series of graphical user interfaces (graphical user interfaces, GUI) can be displayed on the display screen 194 of the electronic device, and the GUIs are home screens of the electronic device.

The electronic device may implement a shooting function through the ISP, the camera 193, the video encoder and decoder, the GPU, the display screen 194, the application processor, and the like.

The external memory interface 120 may be configured to connect to an external storage card such as a micro SD card, to expand a storage capability of the electronic device. The external storage card communicates with the processor 110 via the external memory interface 120, to implement a data storage function. The internal memory 121 may be configured to store computer-executable program code, and the computer-executable program code includes instructions. The processor 110 runs the instructions stored in the internal memory 121, to implement various functional applications and data processing of the electronic device.

The electronic device may use the audio module 170, the speaker 170A, the receiver 170B, the microphone 170C, the headset jack 170D, the application processor, and the like, to implement an audio function, such as music playing or sound recording.

The audio module 170 is configured to convert digital audio information into an analog audio signal output, and also configured to convert an analog audio input into a digital audio signal. The audio module 170 may further be configured to encode and decode audio signals. In some embodiments, the audio module 170 may be disposed in the processor 110, or some functional modules in the audio module 170 may be disposed in the processor 110.

The speaker 170A, also referred to as a "loudspeaker", is configured to convert an audio electrical signal into a sound signal. The electronic device can allow listening to music or answering a hands-free call through the speaker 170A. The receiver 170B, also referred to as "earpiece", is configured to convert an electrical audio signal into a sound signal. The microphone 170C, also referred to as a "mic" or a "mike", is configured to convert a sound signal into an electrical signal. When making a call or sending speech information, a user may make a sound approaching the microphone 170C through the mouth, to input a sound signal into the microphone 170C. The headset jack 170D is configured to connect to a wired headset.

The pressure sensor 180A is configured to sense a pressure signal, and may convert the pressure signal into an electrical signal. In some embodiments, the pressure sensor 180A may be arranged at the display 194. Many types of pressure sensors 180A such as a resistive pressure sensor, an inductive pressure sensor, and a capacitive pressure sensor exist. The gyroscope sensor 180B may be configured to determine a motion attitude of the electronic device. The air pressure sensor 180C is configured to measure an air pressure. The magnetic sensor 180D may include a Hall sensor. The electronic device may use the magnetic sensor 180D to detect opening or closing of a flip leather case. The acceleration sensor 180E may detect magnitudes of acceleration of the electronic device in various directions (generally in three axes). The distance sensor 180F is configured to measure a distance. The optical proximity sensor 180G may include a light-emitting diode (LED) and an optical detector. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch component". The touch sensor 180K may be disposed on the display screen 194, and the touch sensor 180K and the display screen 194 form a touchscreen, which is also referred to as a "touch screen". The bone conduction sensor 180M may acquire a vibration signal. The button 190 includes a power on/off button, a volume button, and the like. The button 190 may be a mechanical button, may be a touch key, or may be a virtual key. The motor 191 may generate a vibration prompt. The indicator 192 may be an indicator light that may be configured to indicate a charging state and a power change, or may further be configured to indicate a message, a missed call, a notification, and the like. The SIM card interface 195 is configured to connect a SIM card.

In addition, an operating system runs on the foregoing components, for example, an iOS operating system developed by Apple, an Android (Android) open source operating system developed by Google, and a Windows operating system developed by Microsoft. An application may be installed and run on this operating system.

To make the solutions provided in this application clear, the solutions provided in this application are described below through embodiments with reference to the drawings.

In the conventional technologies, an electronic device is difficult to be connected to a Bluetooth hearing aid because the electronic device cannot recognize a device type of the Bluetooth hearing aid. To resolve this problem, an embodiment of this application provides a method for connecting a Bluetooth hearing aid. The method is applied to the electronic device.

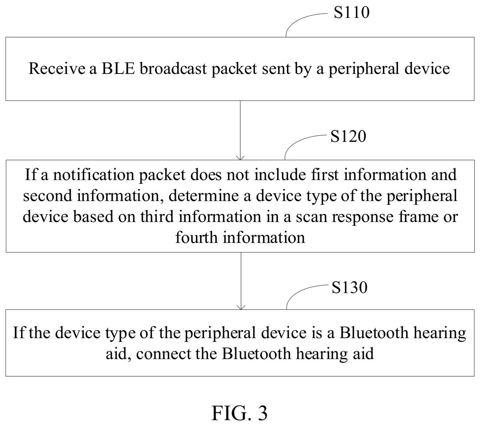

Refer to FIG. 3. A method for connecting a Bluetooth hearing aid provided in embodiments of this application includes the following steps.

Step S110: Receive a Bluetooth low power BLE broadcast packet sent by a peripheral device.

In an ASHA protocol, the BLE broadcast packet includes a notification packet and a scan response (that is, scan response) frame. The peripheral device is a Bluetooth device that may receive data sent by an electronic device.

Step S120: If the notification packet does not include first information and second information, determine a device type of the peripheral device based on third information in the scan response frame or fourth information.

The first information and the second information are respectively configured to indicate the device type and a left-ear identifier or a right-ear identifier. In the ASHA protocol, the first information is an ASHA UUID included in the notification packet, and the electronic device may usually recognize, based on the ASHA UUID, whether the peripheral device is a Bluetooth hearing aid. The second information is a left-ear identifier or a right-ear identifier in the notification packet. If the notification information includes the left-ear identifier or the right-ear identifier, the electronic device may usually determine that the peripheral device is the Bluetooth hearing aid, and may determine, based on the left-ear identifier or the right-ear identifier, whether the Bluetooth hearing aid belongs to the left ear or the right ear. In this case, if the notification packet does not include the first information and the second information, in this embodiment of this application, the device type of the peripheral device may be determined based on the third information in the scan response frame or the fourth information.

The third information is at least one piece of information indicating the device type and information indicating the left-ear identifier or the right-ear identifier. If the electronic device determines that the scan response frame includes the at least one piece of information, whether the peripheral device is the Bluetooth hearing aid may be determined based on the at least one piece of information.

In addition, the fourth information is located in the notification packet and/or the scan response frame and configured to indicate a service supported by the peripheral device. The notification packet and/or the scan response frame may include a UUID of the service supported by the peripheral device. The UUID of the service is used to indicate the service supported by the peripheral device. If the service is corresponding to a service supported by the Bluetooth hearing aid, the electronic device may determine that the peripheral device is the Bluetooth hearing aid.

Step S130: If the device type of the peripheral device is the Bluetooth hearing aid, connect the Bluetooth hearing aid.

If the electronic device is paired with the Bluetooth hearing aid in advance, after determining that the device type of the peripheral device is the Bluetooth hearing aid, the electronic device may be directly connected to the Bluetooth hearing aid, to improve efficiency of connecting the electronic device to the Bluetooth hearing aid.

In addition, if the electronic device is not paired with the Bluetooth hearing aid in advance, after determining that the device type of the peripheral device is the Bluetooth hearing aid, the electronic device may display an icon of the Bluetooth hearing aid on a search page, and after receiving a connection operation for the search page, may be connected to the Bluetooth hearing aid, to implement the connection to the Bluetooth hearing aid based on a user choice, thereby meeting a user requirement.

It may be learned from the description of the conventional technologies, in the conventional technologies, if the electronic device does not recognize the device type of the peripheral device, the electronic device cannot be connected to the peripheral device, or the user may connect the peripheral device by performing several operations on the electronic device.

According to steps provided in this application, the electronic device can recognize the device type of the peripheral device, and after recognizing that the peripheral device is the Bluetooth hearing aid, directly connect the Bluetooth hearing aid or connect the Bluetooth hearing aid based on the connection operation on the search page. Compared with a connection manner in the conventional technologies, this connection manner is more convenient and efficient.

In the solutions provided in embodiments of this application, when the notification packet does not include the information indicating the device type and the information indicating the left-ear identifier or the right-ear identifier, whether the peripheral device is the Bluetooth hearing aid can be determined through the method, and when it is determined that the peripheral device is the Bluetooth hearing aid, the Bluetooth hearing aid can be connected. This resolves, in the conventional technologies, a problem that the electronic device is difficult to be connected to the Bluetooth hearing aid because the electronic device cannot recognize the device type of the Bluetooth hearing aid.

In step S120, the operation of determining the device type of the peripheral device based on the fourth information is provided, and in order to describe how to determine the device type of the peripheral device based on the fourth information, the following discloses several feasible implementations:
(1) If the fourth information indicates that the service supported by the peripheral device includes a volume adjustment service (that is, Volume) of a hearing aid, it is determined that the device type of the peripheral device is the Bluetooth hearing aid.
   When using the Bluetooth hearing aid, the user sometimes expects to adjust, using the volume adjustment service, a volume output by the Bluetooth hearing aid. Therefore, in this implementation, if either of the notification packet and the scan response frame includes the fourth information indicating the volume adjustment service of the hearing aid, the electronic device may determine that the peripheral device is the Bluetooth hearing aid.
(2) If the fourth information indicates that the service supported by the peripheral device includes an audio control point (that is, AudioControlPoint) service, it is determined that the device type of the peripheral device is the Bluetooth hearing aid.
   The audio control point service is used to indicate whether the Bluetooth hearing aid starts to play a received audio signal. Therefore, if the notification packet and/or the scan response frame include/includes the fourth information indicating the audio control point service, the electronic device may determine that the peripheral device is the Bluetooth hearing aid.
(3) If the fourth information indicates that the service supported by the peripheral device includes a status report of the audio control point (AudioStatusPoint), it is determined that the device type of the peripheral device is the Bluetooth hearing aid.

The status report service of the audio control point is used to indicate whether a status of the audio control point is normal. If the notification packet and/or the scan response frame include/includes the fourth information indicating the status report service of the audio control point, the electronic device may determine that the peripheral device is the Bluetooth hearing aid.

In a practical application scenario, the device type of the peripheral device may be determined by any one of the foregoing implementations. Certainly, the electronic device may further determine, based on UUIDs of other forms of services, whether the peripheral device is the Bluetooth hearing aid. This is not limited in this application.

Through the operations in step S110 to step S130, it may be determined whether the peripheral device is the Bluetooth hearing aid. In addition, in some cases, the user also hopes to understand whether the Bluetooth hearing aid is adapted for wearing in a left ear or a right ear. To meet this requirement of the user, this application provides another embodiment.

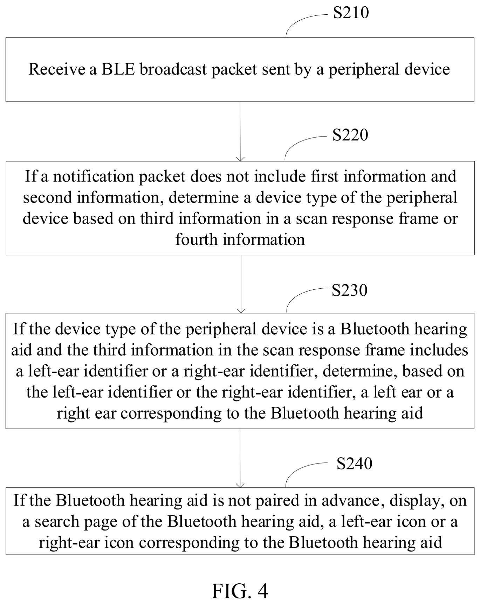

Refer to the schematic working flowchart shown in FIG. 4. The embodiment includes the following steps.

Step S210: Receive a BLE broadcast packet sent by a peripheral device, where the BLE broadcast packet includes a notification packet and a scan response frame.

Step S220: If the notification packet does not include first information and second information, determine a device type of the peripheral device based on third information in the scan response frame or fourth information, where the first information and the second information are respectively configured to indicate the device type and a left-ear identifier or a right-ear identifier, the third information is at least one piece of information indicating the device type and information indicating the left-ear identifier or the right-ear identifier, and the fourth information is located in the notification packet and/or the scan response frame and configured to indicate a service supported by the peripheral device.

Operation processes of step S210 and step S220 are the same as the operation processes of step S110 and step S120. Mutual reference may be made, and details are not described herein again.

Step S230: If the device type of the peripheral device is the Bluetooth hearing aid and the third information in the scan response frame includes the left-ear identifier or the right-ear identifier, determine, based on the left-ear identifier or the right-ear identifier, a left ear or a right ear corresponding to the Bluetooth hearing aid.

Step S240: If the Bluetooth hearing aid is not paired in advance, display, on a search page of the Bluetooth hearing aid, a left-ear icon or a right-ear icon corresponding to the Bluetooth hearing aid. Therefore, the user may select whether connecting the Bluetooth hearing aid.

The left-ear icon or the right-ear icon corresponding to the Bluetooth hearing aid may be represented by a letter, a text, or a graphic. If the icon is represented by a letter, the letter may include "L" (indicating that the Bluetooth hearing aid is adapted for wearing in a left ear) and "R" (indicating that the Bluetooth hearing aid is adapted for wearing in a right ear); if the icon is represented by a text, the text may include "left" (indicating that the Bluetooth hearing aid is adapted for wearing in a left ear) and "right" (indicating that the Bluetooth hearing aid is adapted for wearing in a right ear); or if the icon is represented by a graphic, the graphic may include an ear graphic directs the left (indicating that the Bluetooth hearing aid is adapted for wearing in a left ear) and an ear graphic directs the right (indicating that the Bluetooth hearing aid is adapted for wearing in a right ear).

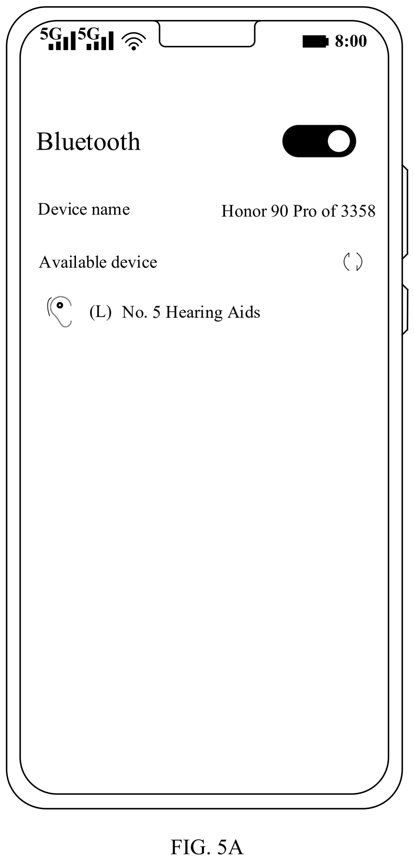

In a possible design, after recognizing the left ear or the right ear corresponding to the Bluetooth hearing aid, a search page displayed by the electronic device is shown in FIG. 5A. In this figure, the search page displays a corresponding icon of the Bluetooth hearing aid, and the letter "L" is located on an icon side and indicates that the Bluetooth hearing aid is adapted for wearing in the left ear.

In the conventional technologies, whether the Bluetooth hearing aid corresponds to the left ear or the right ear is determined based on the second information included in the notification packet. If the notification packet does not include the second information, whether the Bluetooth hearing aid corresponds to the left ear or the right ear cannot be recognized.

To address this problem, in the solution disclosed in this embodiment of this application, after it is determined that the peripheral device is the Bluetooth hearing aid, whether the Bluetooth hearing aid corresponds to the left ear or the right ear is determined based on the left-ear identifier or the right-ear identifier in the scan response frame, to resolve the problem. In addition, in the solutions, the search page of the Bluetooth hearing aid displays the left-ear icon or the right-ear icon corresponding to the Bluetooth hearing aid, so that the user can understand, based on the icon on the search page, the left ear or the right ear corresponding to the Bluetooth hearing aid. In addition, in the solutions, if the user needs to wear the Bluetooth hearing aid in one ear, the user can select a required Bluetooth hearing aid based on the icon, to improve wearing experience of the user.

Further, in this embodiment, if the search page displays the left-ear icon or the right-ear icon corresponding to the Bluetooth hearing aid, after receiving an operation for the search page, the electronic device may be connected to the Bluetooth hearing aid, and the electronic device and the Bluetooth hearing aid are all in a connection state.

Through the operations in step S110 to step S130, it may be determined whether the peripheral device is the Bluetooth hearing aid. In addition, in some cases, after a connection to the Bluetooth hearing aid is implemented, the user also hopes to understand whether the Bluetooth hearing aid is adapted for wearing in the left ear or the right ear. To meet this requirement of the user, this application provides another embodiment.

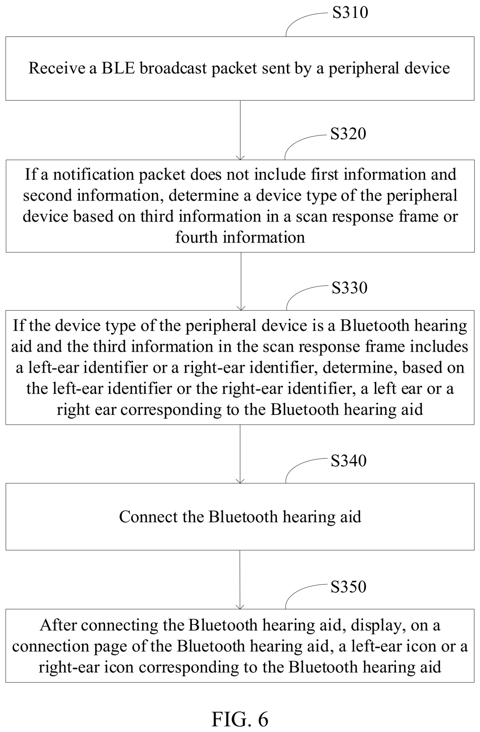

Refer to the schematic working flowchart shown in FIG. 6. The embodiment includes the following steps.

Step S310: Receive a BLE broadcast packet sent by a peripheral device, where the BLE broadcast packet includes a notification packet and a scan response frame.

Step S320: If the notification packet does not include first information and second information, determine a device type of the peripheral device based on third information in the scan response frame or fourth information, where the first information and the second information are respectively configured to indicate the device type and a left-ear identifier or a right-ear identifier, the third information is at least one piece of information indicating the device type and information indicating the left-ear identifier or the right-ear identifier, and the fourth information is located in the notification packet and/or the scan response frame and configured to indicate a service supported by the peripheral device.

Operation processes of step S310 and step S320 are the same as the operation processes of step S110 and step S120. Mutual reference may be made, and details are not described herein again.

Step S330: If the device type of the peripheral device is the Bluetooth hearing aid and the third information in the scan response frame includes the left-ear identifier or the right-ear identifier, determine, based on the left-ear identifier or the right-ear identifier, a left ear or a right ear corresponding to the Bluetooth hearing aid.

Step S340: Connect the Bluetooth hearing aid.

Step S350: After connecting the Bluetooth hearing aid, display, on a connection page of the Bluetooth hearing aid, a left-ear icon or the right-ear icon corresponding to the Bluetooth hearing aid.

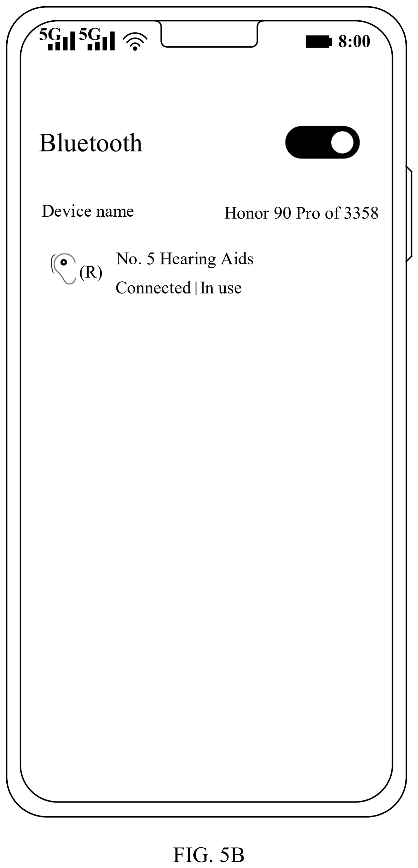

In a possible design, after recognizing the left ear or the right ear corresponding to the Bluetooth hearing aid, a connection page displayed by the electronic device is shown in FIG. 5B. In this figure, the connection page displays a corresponding icon of the Bluetooth hearing aid, and the letter "R" is located on an icon side and indicates that the Bluetooth hearing aid is adapted for wearing in the right ear.

In the solutions provided in embodiments of this application, after it is determined that the peripheral device is the Bluetooth hearing aid, whether the Bluetooth hearing aid corresponds to the left ear or the right ear be recognized based on the left-ear identifier or the right-ear identifier in the scan response frame. Therefore, in the conventional technologies, if the notification packet does not include the second information, the problem that the Bluetooth hearing aid corresponds to the left ear or the right ear cannot be recognized can be resolved. In addition, in the solutions, the connection page of the Bluetooth hearing aid may display the left-ear icon or the right-ear icon corresponding to the Bluetooth hearing aid. In this case, the user can understand, by viewing the connection page, the left ear or the right ear corresponding to the connected Bluetooth hearing aid.

In addition, in the description and FIG. 6, the left ear or the right ear corresponding to the Bluetooth hearing aid is determined based on the left-ear identifier or the right-ear identifier in the scan response frame, and then the operation of connecting the Bluetooth hearing aid is performed. In a practical application scenario, there is no strict restriction on a time sequence for the two steps. For example, the operation of connecting the Bluetooth hearing aid may also be performed first, and then the left ear or the right ear corresponding to the Bluetooth hearing aid may be determined based on the left-ear identifier or the right-ear identifier in the scan response frame. Alternatively, the two steps may be performed at the same time. This is not limited in this application.

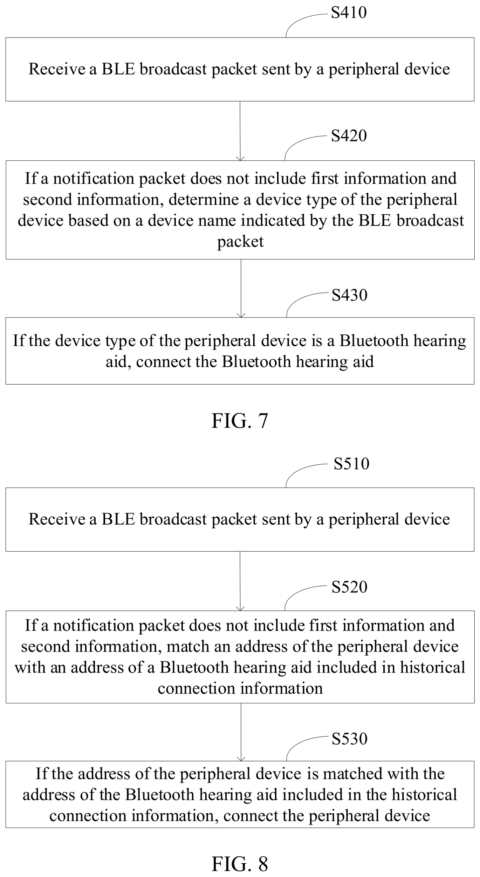

Another embodiment of this application provides a method for connecting a Bluetooth hearing aid, to resolve, in the conventional technologies, an electronic device is difficult to be connected to a Bluetooth hearing aid because the electronic device cannot recognize a device type of the Bluetooth hearing aid. The method is applied to the electronic device. Refer to FIG. 7. A method for connecting a Bluetooth hearing aid provided in embodiments of this application includes the following steps.

Step S410. Receive a Bluetooth low power BLE broadcast packet sent by a peripheral device, where the BLE broadcast packet includes a notification packet.

Step S420: If the notification packet does not include first information and second information, determine a device type of the peripheral device based on a device name indicated by the BLE broadcast packet.

The first information and the second information are respectively configured to indicate the device type and a left-ear identifier or a right-ear identifier. In the ASHA protocol, the first information is an ASHA UUID included in the notification packet, and the electronic device may usually recognize, based on the ASHA UUID, whether the peripheral device is a Bluetooth hearing aid. The second information is a left-ear identifier or a right-ear identifier in the notification packet. If the notification information includes the left-ear identifier or the right-ear identifier, the electronic device may usually determine that the peripheral device is the Bluetooth hearing aid, and may determine, based on the left-ear identifier or the right-ear identifier, whether the Bluetooth hearing aid belongs to the left ear or the right ear. In this case, if the notification packet does not include the first information and the second information, in this embodiment of this application, the device type of the peripheral device may be determined based on the device name indicated by the BLE broadcast packet.

For example, if the device name indicated by the BLE broadcast packet includes fields such as "Hearing" or "Hearing Aid", it may be determined that the device type of the peripheral device is the Bluetooth hearing aid.

Step S430: If the device type of the peripheral device is the Bluetooth hearing aid, connect the Bluetooth hearing aid.

If the electronic device is paired with the Bluetooth hearing aid in advance, after determining that the device type of the peripheral device is the Bluetooth hearing aid, the electronic device may be directly connected to the Bluetooth hearing aid, to improve efficiency of connecting the electronic device to the Bluetooth hearing aid.

In addition, if the electronic device is not paired with the Bluetooth hearing aid in advance, after determining that the device type of the peripheral device is the Bluetooth hearing aid, the electronic device may display an icon of the Bluetooth hearing aid on a search page, and after receiving a connection operation for the search page, may be connected to the Bluetooth hearing aid, to implement the connection to the Bluetooth hearing aid based on a user choice, thereby meeting a user requirement.

In the solutions provided in embodiments of this application, when the notification packet does not include the information indicating the device type and the information indicating the left-ear identifier or the right-ear identifier, whether the peripheral device is the Bluetooth hearing aid can be determined through the method, and when it is determined that the peripheral device is the Bluetooth hearing aid, the Bluetooth hearing aid can be connected. This resolves, in the conventional technologies, a problem that the electronic device is difficult to be connected to the Bluetooth hearing aid because the electronic device cannot recognize the device type of the Bluetooth hearing aid.

Through the operations in step S410 to step S430, it may be determined whether the peripheral device is the Bluetooth hearing aid. In addition, in some cases, the user also hopes to understand whether the Bluetooth hearing aid is adapted for wearing in the left ear or the right ear. To meet this requirement of the user, this application provides another embodiment. This embodiment includes the following steps:
receiving a BLE broadcast packet sent by a peripheral device, where the BLE broadcast packet includes a notification packet and a scan response frame;
if the notification packet does not include first information and second information, determining a device type of the peripheral device based on a device name indicated by the BLE broadcast packet, where the first information and the second information are respectively configured to indicate the device type and a left-ear identifier or a right-ear identifier,
operation processes of the two steps are the same as the operation processes of step S110 and step S 120, and mutual reference may be made, and details are not described herein again;
if the device type of the peripheral device is the Bluetooth hearing aid and the BLE broadcast packet further includes a scan response frame, determining, based on a left-ear identifier or a right-ear identifier in the scan response frame, a left ear or a right ear corresponding to the Bluetooth hearing aid; and
if the Bluetooth hearing aid is not paired in advance, displaying, on a search page of the Bluetooth hearing aid, a left-ear icon or a right-ear icon corresponding to the Bluetooth hearing aid, and therefore, the user may select whether connecting the Bluetooth hearing aid.

In the conventional technologies, whether the Bluetooth hearing aid corresponds to the left ear or the right ear is determined based on the second information included in the notification packet. If the notification packet does not include the second information, whether the Bluetooth hearing aid corresponds to the left ear or the right ear cannot be recognized.

To address this problem, in the solution disclosed in this embodiment of this application, after it is determined that the peripheral device is the Bluetooth hearing aid, whether the Bluetooth hearing aid corresponds to the left ear or the right ear is determined based on the left-ear identifier or the right-ear identifier in the scan response frame, to resolve the problem. In addition, in the solutions, the search page of the Bluetooth hearing aid displays the left-ear icon or the right-ear icon corresponding to the Bluetooth hearing aid, so that the user can understand, based on the icon on the search page, the left ear or the right ear corresponding to the Bluetooth hearing aid. In addition, in the solutions, if the user needs to wear the Bluetooth hearing aid in one ear, the user can select a required Bluetooth hearing aid based on the icon for connection, to improve wearing experience of the user.

Through the foregoing operations, it may be determined whether the peripheral device is the Bluetooth hearing aid. In addition, in some cases, after a connection to the Bluetooth hearing aid is implemented, the user also hopes to understand whether the Bluetooth hearing aid is adapted for wearing in the left ear or the right ear. To meet this requirement of the user, this application provides another embodiment. This embodiment includes the following steps:
receiving a Bluetooth low power BLE broadcast packet sent by a peripheral device, where the BLE broadcast packet includes a notification packet;
if the notification packet does not include first information and second information, determining a device type of the peripheral device based on a device name indicated by the BLE broadcast packet, where the first information and the second information are respectively configured to indicate the device type and a left-ear identifier or a right-ear identifier,
operation processes of the two steps are the same as the operation processes of step S410 and step S420, and mutual reference may be made, and details are not described herein again,
if the device type of the peripheral device is the Bluetooth hearing aid and the BLE broadcast packet further includes a scan response frame, determining, based on a left-ear identifier or a right-ear identifier in the scan response frame, a left ear or a right ear corresponding to the Bluetooth hearing aid;
connecting the Bluetooth hearing aid; and
after connecting the Bluetooth hearing aid, displaying, on a connection page of the Bluetooth hearing aid, a left-ear icon or a right-ear icon corresponding to the Bluetooth hearing aid.

In the conventional technologies, whether the Bluetooth hearing aid corresponds to the left ear or the right ear is determined based on the second information included in the notification packet. If the notification packet does not include the second information, whether the Bluetooth hearing aid corresponds to the left ear or the right ear cannot be recognized.

To address this problem, in the solution disclosed in this embodiment of this application, after it is determined that the peripheral device is the Bluetooth hearing aid, whether the Bluetooth hearing aid corresponds to the left ear or the right ear is determined based on the left-ear identifier or the right-ear identifier in the scan response frame, to resolve the problem. In addition, in the solutions, the connection page of the Bluetooth hearing aid may display the left-ear icon or the right-ear icon corresponding to the Bluetooth hearing aid. In this case, the user can understand, by viewing the connection page, the left ear or the right ear corresponding to the connected Bluetooth hearing aid.

In addition, in the description, the left ear or the right ear corresponding to the Bluetooth hearing aid is determined based on the left-ear identifier or the right-ear identifier in the scan response frame, and then the operation of connecting the Bluetooth hearing aid is performed. In a practical application scenario, there is no strict restriction on a time sequence for the two steps. For example, the operation of connecting the Bluetooth hearing aid may also be performed first, and then the left ear or the right ear corresponding to the Bluetooth hearing aid may be determined based on the left-ear identifier or the right-ear identifier in the scan response frame. Alternatively, the two steps may be performed at the same time. This is not limited in this application.

Another embodiment of this application provides a method for connecting a Bluetooth hearing aid, to resolve, in the conventional technologies, an electronic device is difficult to be connected to a Bluetooth hearing aid because the electronic device cannot recognize a device type of the Bluetooth hearing aid. The method is applied to the electronic device. Refer to FIG. 8. A method for connecting a Bluetooth hearing aid provided in embodiments of this application includes the following steps.

Step S510: Receive a Bluetooth low power BLE broadcast packet sent by a peripheral device, where the BLE broadcast packet includes a notification packet.

Step S520: If the notification packet does not include first information and second information, match an address of the peripheral device with an address of the Bluetooth hearing aid included in historical connection information.

The first information and the second information are respectively configured to indicate the device type and a left-ear identifier or a right-ear identifier. In the ASHA protocol, the first information is an ASHA UUID included in the notification packet, and the electronic device may usually recognize, based on the ASHA UUID, whether the peripheral device is a Bluetooth hearing aid. The second information is a left-ear identifier or a right-ear identifier in the notification packet. If the notification information includes the left-ear identifier or the right-ear identifier, the electronic device may usually determine that the peripheral device is the Bluetooth hearing aid, and may determine, based on the left-ear identifier or the right-ear identifier, whether the Bluetooth hearing aid belongs to the left ear or the right ear. In this case, if the notification packet does not include the first information and the second information, in this embodiment of this application, the device type of the peripheral device may be determined based on the matching between the address of the peripheral device and the address of the Bluetooth hearing aid included in the historical connection information.

The historical connection information includes address information of the Bluetooth hearing aid to which the electronic device is previously connected. The address may be a media access control address (media access control address, MAC).

S530: If the address of the peripheral device is matched with the address of the Bluetooth hearing aid included in the historical connection information, connect the peripheral device.

If the address of the peripheral device is matched with the address of the Bluetooth hearing aid included in the historical connection information, it indicates that the electronic device has been once connected to the peripheral device. In this case, the electronic device may determine that the peripheral device is the Bluetooth hearing aid, and is connected to the peripheral device.

Alternatively, in this step, because the address of the peripheral device is matched with the address of the Bluetooth hearing aid included in the historical connection information, that is, the electronic device has been once connected to the peripheral device, it indicates that the electronic device has been once paired with the Bluetooth hearing aid. In this case, the electronic device may be directly connected to the Bluetooth hearing aid, to improve the efficiency of connecting the electronic device to the Bluetooth hearing aid.

Alternatively, if it is determined that the address of the peripheral device is matched with the address of the Bluetooth hearing aid included in the historical connection information, the electronic device may display an icon of the Bluetooth hearing aid on the search page, and after receiving a connection operation for the search page, may be connected to the Bluetooth hearing aid, to implement the connection to the Bluetooth hearing aid based on a user choice, thereby meeting a user requirement.

In the solutions provided in embodiments of this application, when the notification packet does not include the information indicating the device type and the information indicating the left-ear identifier or the right-ear identifier, whether the peripheral device is the Bluetooth hearing aid can be determined through the method, and when it is determined that the peripheral device is the Bluetooth hearing aid, the Bluetooth hearing aid can be connected. This resolves, in the conventional technologies, a problem that the electronic device is difficult to be connected to the Bluetooth hearing aid because the electronic device cannot recognize the device type of the Bluetooth hearing aid.

In this embodiment, the operation of matching the address of the peripheral device with the address of the Bluetooth hearing aid included in the historical connection information is disclosed through step S520. In a practical application scenario, the address of the Bluetooth hearing aid usually remains unchanged in a preset cycle. To improve the reliability of connecting the electronic device to the Bluetooth hearing aid, the address of the Bluetooth hearing aid is changed over one preset cycle. The preset cycle may be referred to as a change cycle of the address. In view of this situation, the operation of matching the address of the peripheral device with the address of the Bluetooth hearing aid included in the historical connection information may be implemented by the following steps.

First, target connection information in the historical connection information is determined. A difference between a time point corresponding to the target connection information and a time point when the BLE broadcast packet is received is in a preset range.

After the Bluetooth hearing aid is connected to the electronic device, the electronic device determines corresponding connection information. The connection information usually includes the address of the Bluetooth hearing aid. The address may be determined based on address information included in the BLE broadcast packet. In addition, the address of the Bluetooth hearing aid usually remains unchanged during the connection between the Bluetooth hearing aid and the electronic device. If the Bluetooth hearing aid is unpaired with the electronic device, from a time point of unpairing, the address of the Bluetooth hearing aid is usually changed every a first preset time period. The unpairing may include unpairing caused by restoration of factory settings, unpairing performed based on a received user operation, or the like.

Therefore, after the Bluetooth hearing aid is unpaired with the electronic device, address information included in the BLE broadcast packet that is sent by the Bluetooth hearing aid in the first preset time period after the unpairing is the same as address information included in the BLE broadcast packet that is sent before the unpairing. After duration of the unpairing exceeds the first preset time period, address information included in the BLE broadcast packet that is sent by the Bluetooth hearing aid is not the same as the address information included in the BLE broadcast packet that is sent before the unpairing.

In the solution provided in this embodiment of this application, if the electronic device is once connected to the Bluetooth hearing aid and connection information of the Bluetooth hearing aid is stored in the electronic device, the connection information of the Bluetooth hearing aid is the target connection information. A time point corresponding to the target connection information is a time point when the Bluetooth hearing aid that is historically connected to the electronic device is unpaired from the electronic device, and a difference between the time point corresponding to the target connection information and the time point when the BLE broadcast packet is received is within the preset range.

The preset range is determined based on a change cycle of the address of the Bluetooth hearing aid and is used to guarantee that the difference between the time point corresponding to the target connection information and the time point when the BLE broadcast packet is received is not greater than the change cycle of the address. For example, if the address of the Bluetooth hearing aid is changed every 15 minutes after the Bluetooth hearing aid is unpaired with the electronic device, the difference between the time point corresponding to the target connection information and the time point when the BLE broadcast packet is received is not greater than 15 minutes.

Then, the address of the peripheral device is matched with the address of the Bluetooth hearing aid included in the target connection information.

After the Bluetooth hearing aid is unpaired with the electronic device, the address of the Bluetooth hearing aid is changed. In the solution provided in this embodiment of this application, only the address of the peripheral device is matched with the address of the Bluetooth hearing aid included in the target connection information. This reduces an amount of data for pairing and improves pairing efficiency, thereby improving efficiency of connecting the Bluetooth hearing aid.

Through the operations in step S510 to step S530, it may be determined whether the peripheral device is the Bluetooth hearing aid. In addition, in some cases, the user also hopes to understand whether the Bluetooth hearing aid is adapted for wearing in the left ear or the right ear. To meet this requirement of the user, this application provides another embodiment. This embodiment includes the following steps:
receiving a Bluetooth low power BLE broadcast packet sent by a peripheral device, where the BLE broadcast packet includes a notification packet;
if the notification packet does not include first information and second information, matching an address of the peripheral device with an address of the Bluetooth hearing aid included in historical connection information, where the first information and the second information are respectively configured to indicate the device type and a left-ear identifier or a right-ear identifier,
operation processes of the two steps are the same as the operation processes of step S510 and step S520, and mutual reference may be made, and details are not described herein again;
if the address of the peripheral device is matched with the address of the Bluetooth hearing aid included in the historical connection information and the BLE broadcast packet further includes a scan response frame, determining, based on a left-ear identifier or a right-ear identifier included in the scan response frame, a left ear or a right ear corresponding to the Bluetooth hearing aid;
connecting the Bluetooth hearing aid; and
after connecting the Bluetooth hearing aid, displaying, on a connection page of the Bluetooth hearing aid, a left-ear icon or a right-ear icon corresponding to the Bluetooth hearing aid.

In the conventional technologies, whether the Bluetooth hearing aid corresponds to the left ear or the right ear is determined based on the second information included in the notification packet. If the notification packet does not include the second information, whether the Bluetooth hearing aid corresponds to the left ear or the right ear cannot be recognized.

To address this problem, in the solution disclosed in this embodiment of this application, after it is determined that the peripheral device is the Bluetooth hearing aid, whether the Bluetooth hearing aid corresponds to the left ear or the right ear is determined based on the left-ear identifier or the right-ear identifier in the scan response frame, to resolve the problem. In addition, in the solutions, the connection page of the Bluetooth hearing aid may display the left-ear icon or the right-ear icon corresponding to the Bluetooth hearing aid. In this case, the user can understand, by viewing the connection page, the left ear or the right ear corresponding to the connected Bluetooth hearing aid.

In addition, in the description, the left ear or the right ear corresponding to the Bluetooth hearing aid is determined based on the left-ear identifier or the right-ear identifier in the scan response frame, and then the operation of connecting the Bluetooth hearing aid is performed. In a practical application scenario, there is no strict restriction on a time sequence for the two steps. For example, the operation of connecting the Bluetooth hearing aid may also be performed first, and then the left ear or the right ear corresponding to the Bluetooth hearing aid may be determined based on the left-ear identifier or the right-ear identifier in the scan response frame. Alternatively, the two steps may be performed at the same time. This is not limited in this application.

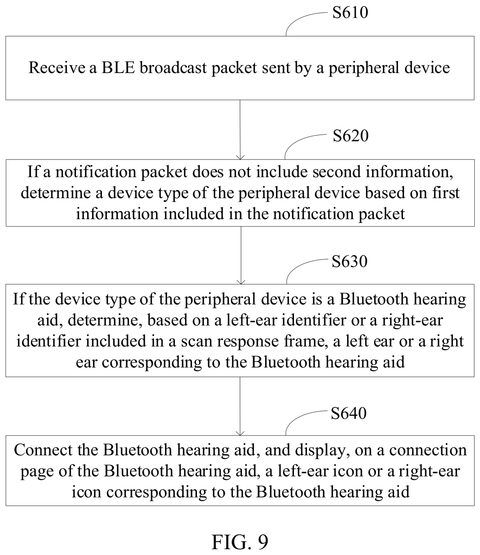

Another embodiment of this application provides a method for connecting a Bluetooth hearing aid, to resolve, in the conventional technologies, an electronic device is difficult to be connected to a Bluetooth hearing aid because the electronic device cannot recognize a device type of the Bluetooth hearing aid. The method is applied to the electronic device. Refer to FIG. 9. A method for connecting a Bluetooth hearing aid provided in embodiments of this application includes the following steps.

Step S610: Receive a Bluetooth low power BLE broadcast packet sent by a peripheral device, where the BLE broadcast packet includes a notification packet and a scan response frame.

Step S620: Determine a device type of the peripheral device based on first information included in the notification packet, where the first information is configured to indicate the device type.

In the ASHA protocol, the first information is an ASHA UUID included in the notification packet, and the electronic device may usually recognize, based on the ASHA UUID, whether the peripheral device is a Bluetooth hearing aid.

Step S630: If the notification packet does not include second information and the device type of the peripheral device is a Bluetooth hearing aid, determine a left ear or a right ear of the Bluetooth hearing aid based on a left-ear identifier or a right-ear identifier included in the scan response frame, where the second information is configured indicate the left-ear identifier or the right-ear identifier.

The second information is a left-ear identifier or a right-ear identifier in the notification packet. If the notification information includes the left-ear identifier or the right-ear identifier, the electronic device may usually determine, based on the left-ear identifier or the right-ear identifier, whether the Bluetooth hearing aid belongs to the left ear or the right ear. In this case, if the notification packet does not include the second information, the electronic device cannot determine, based on the notification packet, that Bluetooth hearing aid corresponds to the left ear or the right ear. Therefore, the left ear or the right ear of the Bluetooth hearing aid may be determined based on the left-ear identifier or the right-ear identifier in the scan response frame.

In this step, after the left ear or the right ear corresponding to the Bluetooth hearing aid is determined, a corresponding icon may also be displayed on the search page.

Step S640: Connect the Bluetooth hearing aid, and display, on a connection page of the Bluetooth hearing aid, a left-ear icon or a right-ear icon corresponding to the Bluetooth hearing aid.

In the solutions provided in embodiments of this application, when the notification packet does not include the second information indicating the left-ear identifier or the right-ear identifier, it is determined, based on the first information in the notification packet, whether the peripheral device is the Bluetooth hearing aid, and when it is determined that the peripheral device is the Bluetooth hearing aid, the Bluetooth hearing aid is connected. This resolves, in the conventional technologies, a problem that the electronic device is difficult to be connected to the Bluetooth hearing aid because the electronic device cannot recognize the device type of the Bluetooth hearing aid.

Further, in the solution, based on the scan response frame, the left ear or the right ear corresponding to the Bluetooth hearing aid may be determined, and the left-ear icon or the right-ear icon corresponding to the Bluetooth hearing aid may be displayed on the connection page of the Bluetooth hearing aid.

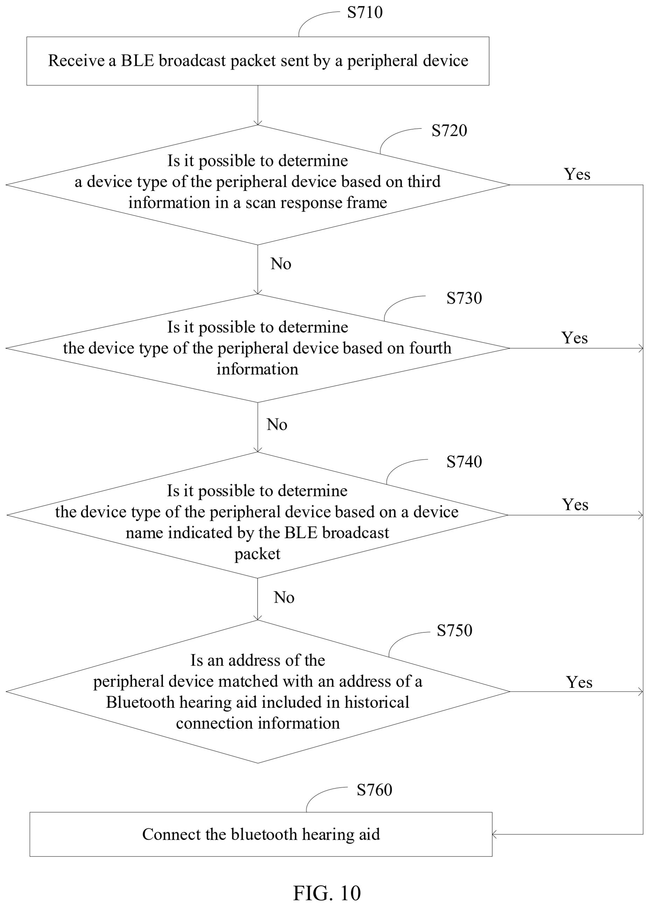

Accordingly, another embodiment of this application provides a method for connecting a Bluetooth hearing aid, to resolve, in the conventional technologies, an electronic device is difficult to be connected to a Bluetooth hearing aid because the electronic device cannot recognize a device type of the Bluetooth hearing aid. The method is applied to the electronic device. In this embodiment, a plurality of pieces of information of applications may be applied to determine the device type of the peripheral device. Refer to FIG. 10. The method for connecting a Bluetooth hearing aid provided in this embodiment of this application includes the following steps.

Step S710: Receive a Bluetooth low power BLE broadcast packet sent by a peripheral device, where the BLE broadcast packet includes a notification packet and a scan response frame.

Step S720: If the notification packet does not include first information and second information, determine whether a device type of the peripheral device may be determined based on third information in the scan response frame. If the device type of the peripheral device may not be determined based on the third information in the scan response frame, perform an operation in step S1300. If the device type of the peripheral device may be determined based on the third information in the scan response frame, perform an operation in step S1600.

The first information and the second information are respectively configured to indicate the device type and a left-ear identifier or a right-ear identifier, and the third information is at least one piece of information indicating the device type and information indicating the left-ear identifier or the right-ear identifier.

Step S730: If the scan response frame does not include the third information, determine whether the device type of the peripheral device may be determined based on fourth information. If the device type of the peripheral device may not be determined based on the fourth information, perform an operation in step S740. If the device type of the peripheral device may be determined based on the fourth information, perform an operation in step S760.

The fourth information is located in the notification packet and/or the scan response frame and configured to indicate a service supported by the peripheral device.

Step S740: If the notification packet and the scan response frame do not include the fourth information, determine the device type of the peripheral device may be determined based on a device name indicated by the BLE broadcast packet. If the device type of the peripheral device may not be determined based on the device name indicated by the BLE broadcast packet, perform an operation in step S750. If the device type of the peripheral device may be determined based on the device name indicated by the BLE broadcast packet, perform an operation in step S760.

Step S750: If the BLE broadcast packet does not include the device name, determine whether an address of the peripheral device is matched with an address of the Bluetooth hearing aid included in historical connection information, and if the address of the peripheral device is matched with the address of the Bluetooth hearing aid included in the historical connection information, perform the operation of step S760.

If the address of the peripheral device is matched with the address of the Bluetooth hearing aid included in the historical connection information, it may be determined that the peripheral device is the Bluetooth hearing aid.

Step S760: If the peripheral device is the Bluetooth hearing aid, connect the Bluetooth hearing aid.

The method for connecting a Bluetooth hearing aid is provided through operations of step S710 to step S760. Through the method, whether the peripheral device is the Bluetooth hearing aid may be determined based on a plurality of pieces of information, for example, the third information in the scan response frame, the fourth information located in the notification packet and/or the scan response frame, the device name indicated by the BLE broadcast packet, and the address of the peripheral device. This improves accuracy of recognizing the device type of the peripheral device and, accordingly, improves accuracy of connecting the electronic device to the Bluetooth hearing aid.

Further, the solutions provided by embodiments of this application further include the following steps:
determining, based on a left-ear identifier or a right-ear identifier included in the scan response frame, a left ear or a right ear corresponding to the Bluetooth hearing aid; and
displaying, on a search page and/or a connection page of the Bluetooth hearing aid, a left-ear icon or a right-ear icon corresponding to the Bluetooth hearing aid.

Through the foregoing steps, when it is determined that the peripheral device is the Bluetooth hearing aid, the left ear or the right ear corresponding to the Bluetooth hearing aid can be determined, and the left-ear icon or the right-ear icon corresponding to the Bluetooth hearing aid can be displayed on the search page and/or the connection page. This facilitates the user to determine the left ear or the right ear corresponding to the Bluetooth hearing aid by viewing the search page and/or the connection page.

The following is an apparatus embodiment of this application, which can be used to perform the method embodiment of this application. For details not disclosed in the apparatus embodiments of this application, refer to the method embodiments of this application.

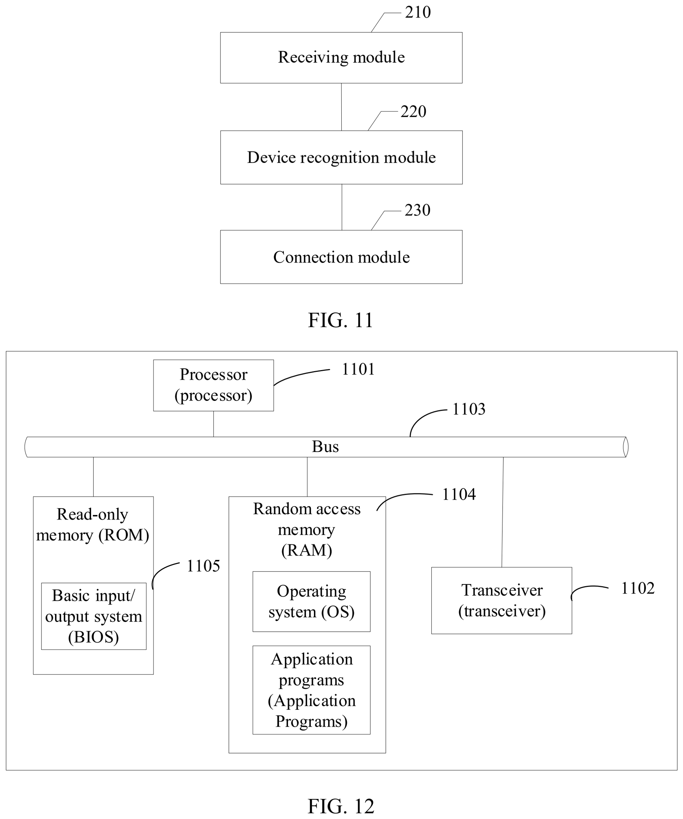

An embodiment of this application discloses an electronic device. Refer to a schematic diagram of a structure shown in FIG. 11. An apparatus includes: a receiving module 210, a device recognition module 220, and a connection module 230.

The receiving module 210 is configured to receive a Bluetooth low power BLE broadcast packet sent by a peripheral device, where the BLE broadcast packet includes a notification packet and a scan response frame.

If the notification packet does not include first information and second information, the device recognition module 220 is configured to determine a device type of the peripheral device based on third information in the scan response frame or fourth information, where the first information and the second information are respectively configured to indicate the device type and a left-ear identifier or a right-ear identifier, the third information is at least one piece of information indicating the device type and information indicating the left-ear identifier or the right-ear identifier, and the fourth information is located in the notification packet and/or the scan response frame and configured to indicate a service supported by the peripheral device.

If the device type of the peripheral device is a Bluetooth hearing aid, the connection module 230 is configured to connect the Bluetooth hearing aid.

According to the apparatus provided in this embodiment of this application, when the notification packet does not include the information indicating the device type and the information indicating the left-ear identifier or the right-ear identifier, whether the peripheral device is the Bluetooth hearing aid can be determined through the method, and when it is determined that the peripheral device is the Bluetooth hearing aid, the Bluetooth hearing aid can be connected. This resolves, in the conventional technologies, a problem that the electronic device is difficult to be connected to the Bluetooth hearing aid because the electronic device cannot recognize the device type of the Bluetooth hearing aid.

In a possible design, the device recognition module 220 is specifically configured to: if the fourth information indicates that the service supported by the peripheral device includes a volume adjustment service of a hearing aid, determine that the device type of the peripheral device is the Bluetooth hearing aid;
if the fourth information indicates that the service supported by the peripheral device includes an audio control point service, determine that the device type of the peripheral device is the Bluetooth hearing aid; or
if the fourth information indicates that the service supported by the peripheral device includes a status report of an audio control point, determine that the device type of the peripheral device is the Bluetooth hearing aid.

In a possible design, the electronic device is further configured to: after determining the device type of the peripheral device, if the device type of the peripheral device is the Bluetooth hearing aid and the third information in the scan response frame includes the left-ear identifier or the right-ear identifier, determine, based on the left-ear identifier or the right-ear identifier, a left ear or a right ear corresponding to the Bluetooth hearing aid; and if the Bluetooth hearing aid is not paired in advance, display, on a search page of the Bluetooth hearing aid, the left-ear icon or the right-ear icon corresponding to the Bluetooth hearing aid.

In a possible design, the electronic device is further configured to: after determining device type of the peripheral device, if the device type of the peripheral device is the Bluetooth hearing aid and the third information in the scan response frame includes the left-ear identifier or the right-ear identifier, determine, based on the left-ear identifier or the right-ear identifier, the left ear or the right ear corresponding to the Bluetooth hearing aid; and after connecting the Bluetooth hearing aid, display, on a connection page of the Bluetooth hearing aid, the left-ear icon or the right-ear icon corresponding to the Bluetooth hearing aid.

In a possible design, the connection module 230 is specifically configured to: if the Bluetooth hearing aid is paired in advance, directly connect the Bluetooth hearing aid; or if the Bluetooth hearing aid is not paired in advance, display an icon of the Bluetooth hearing aid on the search page; and after receiving a connection operation for the search page, connect the Bluetooth hearing aid.

Accordingly, another embodiment of this application provides an electronic device. In this embodiment, the electronic device includes:
a receiving module, a device recognition module, and a connection module;
the receiving module is configured to receive a Bluetooth low power BLE broadcast packet sent by a peripheral device, where the BLE broadcast packet includes a notification packet;
if the notification packet does not include first information and second information, the device recognition module is configured to determine a device type of the peripheral device based on a device name indicated by the BLE broadcast packet, where the first information and the second information are respectively configured to indicate the device type and a left-ear identifier or a right-ear identifier; and
if the device type of the peripheral device is a Bluetooth hearing aid, the connection module is configured to connect the Bluetooth hearing aid.

In a possible design, the electronic device is further configured to: if the device type of the peripheral device is the Bluetooth hearing aid and the BLE broadcast packet further includes a scan response frame, determining, based on a left-ear identifier or a right-ear identifier in the scan response frame, a left ear or a right ear corresponding to the Bluetooth hearing aid; and if the Bluetooth hearing aid is not paired in advance, display, on a search page of the Bluetooth hearing aid, the left-ear icon or the right-ear icon corresponding to the Bluetooth hearing aid.

In a possible design, after determining the device type of the peripheral device, if the device type of the peripheral device is the Bluetooth hearing aid and the BLE broadcast packet further includes a scan response frame, the electronic device is further configured to: determine, based on a left-ear identifier or a right-ear identifier in the scan response frame, a left ear or a right ear corresponding to the Bluetooth hearing aid; and after connecting the Bluetooth hearing aid, display, on a connection page of the Bluetooth hearing aid, the left-ear icon or the right-ear icon corresponding to the Bluetooth hearing aid.

In a possible design, the connection module is specifically configured to: if the Bluetooth hearing aid is paired in advance, directly connect the Bluetooth hearing aid; or if the Bluetooth hearing aid is not paired in advance, display an icon of the Bluetooth hearing aid on the search page; and after receiving a connection operation for the search page, connect the Bluetooth hearing aid.

Accordingly, another embodiment of this application provides an electronic device. In this embodiment, the electronic device includes a receiving module, a device recognition module, and a connection module.

The receiving module is configured to receive a Bluetooth low power BLE broadcast packet sent by a peripheral device, where the BLE broadcast packet includes a notification packet;
if the notification packet does not include first information and second information, the device recognition module is configured to match an address of the peripheral device with an address of a Bluetooth hearing aid included in historical connection information; and
if a device type of the peripheral device is the Bluetooth hearing aid, the connection module is configured to connect the Bluetooth hearing aid.

In a possible design, the device recognition module is specifically configured to: determine target connection information in the historical connection information, where a difference between a time point corresponding to the target connection information and a time point when receiving the BLE broadcast packet is in a preset range; and match the address of the peripheral device with the address of the Bluetooth hearing aid included in the target connection information.

In a possible design, after the address of the peripheral device is matched with the address of the Bluetooth hearing aid included in the historical connection information, if the address of the peripheral device is matched with the address of the Bluetooth hearing aid included in the historical connection information and the BLE broadcast packet further includes the scan response frame, the electronic device is further configured to: determine, based on the left-ear identifier or the right-ear identifier included in the scan response frame, the left ear or the right ear corresponding to the Bluetooth hearing aid; and after connecting the Bluetooth hearing aid, display, on a connection page of the Bluetooth hearing aid, the left-ear icon or the right-ear icon corresponding to the Bluetooth hearing aid.

Accordingly, another embodiment of this application provides an electronic device. In this embodiment, the electronic device includes a receiving module, a device recognition module, and a connection module.

The receiving module is configured to receive a Bluetooth low power BLE broadcast packet sent by a peripheral device, where the BLE broadcast packet includes a notification packet and a scan response frame.

The device recognition module is configured to determine a device type of the peripheral device based on first information included in the notification packet, and the first information is configured to indicate the device type.

If the notification packet does not include second information and the device type of the peripheral device is a Bluetooth hearing aid, the device recognition module is further configured to determine a left ear or a right ear of the Bluetooth hearing aid based on a left-ear identifier or a right-ear identifier included in the scan response frame, and the second information is configured to indicate the left-ear identifier or the right-ear identifier.

The connection module is configured to connect the Bluetooth hearing aid, and display, on a connection page of the Bluetooth hearing aid, the left-ear icon or the right-ear icon corresponding to the Bluetooth hearing aid.

Accordingly, another embodiment of this application provides an electronic device. In this embodiment, the electronic device includes a receiving module, a device recognition module, and a connection module.

The receiving module is configured to receive a Bluetooth low power BLE broadcast packet sent by a peripheral device, where the BLE broadcast packet includes a notification packet and a scan response frame.

If the notification packet does not include first information and second information, after the device recognition module determines that the peripheral device is a Bluetooth hearing aid based on third information in the scan response frame, the connection module is configured to connect the Bluetooth hearing aid, where the first information and the second information are respectively configured to indicate a device type and a left-ear identifier or a right-ear identifier, and the third information is at least one piece of information indicating the device type and information indicating the left-ear identifier or the right-ear identifier.

If the scan response frame does not include third information, after the device recognition module determines that the peripheral device is a Bluetooth hearing aid based on fourth information, the connection module is configured to connect the Bluetooth hearing aid, and the fourth information is located in the notification packet and/or the scan response frame and configured to indicate a service supported by the peripheral device.

If neither the notification packet nor the scan response frame includes fourth information, after the device recognition module determines that the peripheral device is a Bluetooth hearing aid based on a device name indicated by the BLE broadcast packet, the connection module is configured to connect the Bluetooth hearing aid.

If the BLE broadcast packet does not include a device name, after the device recognition module determines that an address of the peripheral device is matched with an address of a Bluetooth hearing aid included in historical connection information, the connection module is configured to connect the peripheral device.

In a possible design, the electronic device is further configured to determine, based on a left-ear identifier or a right-ear identifier included in the scan response frame, a left ear or a right ear corresponding to the Bluetooth hearing aid; and
display, on a search page and/or a connection page of the Bluetooth hearing aid, the left-ear icon or the right-ear icon corresponding to the Bluetooth hearing aid.

Accordingly, an embodiment of this application discloses an electronic device. Refer to a schematic diagram of a structure shown in FIG. 12. The electronic device includes:
a processor 1101 and a memory.

The memory is configured to store program instructions.

The processor 1101 is configured to invoke and execute program instructions stored in the memory, and when the processor 1101 executes the program instructions stored in the memory, the electronic device is enabled to perform all or some of steps in corresponding embodiments of FIG. 3, FIG. 4, and FIG. 6 to FIG. 10.

Further, the electronic device further includes: a transceiver 1102 and a bus 1103. The memory includes a random access memory 1104 and a read-only memory 1105.

The processor is separately coupled to the transceiver, the random access memory, and the read-only memory by using the bus. When the electronic device needs to run, a bootloader bootloader system solidified in a basic input/output system or an embedded system in the read-only memory boots a system to start, to bootstraps the electronic device to enter a normal running state. After the electronic device enters the normal running state, an application program and an operating system run in the random access memory, to enable the electronic device to perform all or some of steps in corresponding embodiments of FIG. 3, FIG. 4, and FIG. 6 to FIG. 10.

The electronic device in embodiments of the present invention may correspond to the electronic device in corresponding embodiments of FIG. 3, FIG. 4, and FIG. 6 to FIG. 10. In addition, the processor, the memory, and the like in the electronic device may implement functions and/or steps and methods implemented by the electronic device in corresponding embodiments of FIG. 3, FIG. 4, and FIG. 6 to FIG. 10. For brevity, details are not described herein again.

In a specific implementation, an embodiment of this application further provides a computer storage medium. The computer storage medium stores a computer program or instructions, and when the computer program or the instructions are executed, a computer is enabled to perform all or some of steps in corresponding embodiments of FIG. 3, FIG. 4, and FIG. 6 to FIG. 10. The computer-readable storage medium may be disposed in any device. The any device may be a random-access memory (random-access memory, RAM). The memory may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory may alternatively include a combination of the foregoing types of memories.

An embodiment of this application further provides a chip system. The chip system includes a processor. The processor is coupled to a memory and configured to store a computer program or instructions. When the processor executes the computer program or the instructions, the chip system is enabled to perform all or some of steps in corresponding embodiments of FIG. 3, FIG. 4, and FIG. 6 to FIG. 10. The chip system may be formed by chips, or may include chips and other discrete components.

The various illustrative logical units and circuits described in the embodiments of this application may implement or operate the described functions by using a general-purpose processor, a digital information processor, an application specific integrated circuit (application specific integrated circuit, ASIC), a field programmable gate array (field programmable gate array, FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by using a combination of computing apparatuses, such as a digital information processor and a microprocessor, a plurality of microprocessors, one or more microprocessors in combination with a digital information processor core, or any other similar configuration.

Steps of the methods or algorithms described in the embodiments of this application may be directly embedded into hardware, a software unit executed by a processor, or a combination thereof. The software unit may be stored in a random access memory (random access memory, RAM), a random access memory, a read-only memory (read-only memory, ROM), an erasable programmable read-only memory (erasable programmable read only memory, EPROM), a register, a hard disk, a removable magnetic disk, a portable compact disc read-only memory (compact disc read-only memory, CD-ROM), or any other form of storage medium in the art. For example, the storage medium may be connected to a processor, so that the processor may read information from the storage medium and write information to the storage medium. Alternatively, the storage medium may be integrated into a processor. The processor and the storage medium may be disposed in the ASIC, and the ASIC may be disposed in user equipment (user equipment, UE). Optionally, the processor and the storage medium may be alternatively disposed in different components of the UE.

It should be understood that sequence numbers of the foregoing processes do not mean execution sequences in various embodiments of this application. The performing sequences of the processes should be determined based on functions and internal logic of the processes, and should not constitute any limitation on the implementation processes of embodiments of this application.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and performed on a computer, all or some of flows or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, coaxial-cable, optical-fiber, or digital-subscriber-line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium, or a semiconductor medium (for example, a solid state disk (solid state disk, SSD)), or the like.

For same or similar parts of the embodiments in this specification, reference may be made to each other, and each embodiment focuses on a difference from other embodiments. In particular, because device and system embodiments are similar to method embodiments, they are described simply. For related parts, reference may be made to descriptions of the method embodiments.

A person skilled in the art may clearly understand that the technology in embodiments of the present invention may be implemented by software in addition to a required universal hardware platform. Based on such an understanding, the technical solutions in the embodiments of the present invention essentially or the part contributing to a conventional technology may be implemented in a form of a software product. The computer software product may be stored in a storage medium, such as a ROM/RAM, a magnetic disk, or an optical disc, and the computer software product may include several instructions for instructing a computer device (which may be a personal computer, a server, or a network device) to perform the methods described in the embodiments or some parts of the embodiments of the present invention.

For same or similar parts in the embodiments in this specification, reference may be made to these embodiments. Especially, for the apparatus embodiment, the apparatus embodiment disclosed in this application is basically similar to the method embodiment, and therefore is described briefly. For related parts, refer to the description of the method embodiment.

The implementations of the present invention described above do not limit the protection scope of the present invention.

## Claims

1. A method for connecting a Bluetooth hearing aid, applied to an electronic device, comprising:
receiving a Bluetooth low power BLE broadcast packet sent by a peripheral device, wherein the BLE broadcast packet comprises a notification packet and a scan response frame;
if the notification packet does not comprise first information and second information, determining a device type of the peripheral device based on third information in the scan response frame or fourth information, wherein the first information and the second information are respectively configured to indicate the device type and a left-ear identifier or a right-ear identifier, the third information is at least one piece of information indicating the device type and information indicating the left-ear identifier or the right-ear identifier, and the fourth information is located in the notification packet and/or the scan response frame and configured to indicate a service supported by the peripheral device; and
if the device type of the peripheral device is a Bluetooth hearing aid, connecting the Bluetooth hearing aid.

2. The method according to claim 1, wherein the determining a device type of the peripheral device based on fourth information comprises:
if the fourth information indicates that the service supported by the peripheral device comprises a volume adjustment service of a hearing aid, determining that the device type of the peripheral device is the Bluetooth hearing aid;
or,
if the fourth information indicates that the service supported by the peripheral device comprises an audio control point service, determining that the device type of the peripheral device is the Bluetooth hearing aid;
or,
if the fourth information indicates that the service supported by the peripheral device comprises a status report of an audio control point, determining that the device type of the peripheral device is the Bluetooth hearing aid.

3. The method according to claim 1, wherein after the determining a device type of the peripheral device, further comprising:
if the device type of the peripheral device is the Bluetooth hearing aid and the third information in the scan response frame comprises the left-ear identifier or the right-ear identifier, determining, based on the left-ear identifier or the right-ear identifier, a left ear or a right ear corresponding to the Bluetooth hearing aid; and
if the Bluetooth hearing aid is not paired in advance, displaying, on a search page of the Bluetooth hearing aid, the left-ear icon or the right-ear icon corresponding to the Bluetooth hearing aid.

4. The method according to claim 1, wherein after the determining a device type of the peripheral device, further comprising:
if the device type of the peripheral device is the Bluetooth hearing aid and the third information in the scan response frame comprises the left-ear identifier or the right-ear identifier, determining, based on the left-ear identifier or the right-ear identifier, a left ear or a right ear corresponding to the Bluetooth hearing aid; and
after connecting the Bluetooth hearing aid, displaying, on a connection page of the Bluetooth hearing aid, the left-ear icon or the right-ear icon corresponding to the Bluetooth hearing aid.

5. The method according to any one of claims 1 to 4, wherein the connecting the Bluetooth hearing aid comprises:
if the Bluetooth hearing aid is paired in advance, directly connecting the Bluetooth hearing aid;
or,
if the Bluetooth hearing aid is not paired in advance, displaying an icon of the Bluetooth hearing aid on the search page; and
after receiving a connection operation for the search page, connecting the Bluetooth hearing aid.

6. A method for connecting a Bluetooth hearing aid, applied to an electronic device, comprising:
receiving a Bluetooth low power BLE broadcast packet sent by a peripheral device, wherein the BLE broadcast packet comprises a notification packet;
if the notification packet does not comprise first information and second information, determining a device type of the peripheral device based on a device name indicated by the BLE broadcast packet, wherein the first information and the second information are respectively configured to indicate the device type and a left-ear identifier or a right-ear identifier; and
if the device type of the peripheral device is a Bluetooth hearing aid, connecting the Bluetooth hearing aid.

7. The method according to claim 6, wherein after the determining a device type of the peripheral device, further comprising:
if the device type of the peripheral device is the Bluetooth hearing aid and the BLE broadcast packet further comprises a scan response frame, determining, based on a left-ear identifier or a right-ear identifier in the scan response frame, a left ear or a right ear corresponding to the Bluetooth hearing aid; and
if the Bluetooth hearing aid is not paired in advance, displaying, on a search page of the Bluetooth hearing aid, the left-ear icon or the right-ear icon corresponding to the Bluetooth hearing aid.

8. The method according to claim 6, wherein after the determining a device type of the peripheral device, further comprising:
if the device type of the peripheral device is the Bluetooth hearing aid and the BLE broadcast packet further comprises a scan response frame, determining, based on a left-ear identifier or a right-ear identifier in the scan response frame, a left ear or a right ear corresponding to the Bluetooth hearing aid; and
after connecting the Bluetooth hearing aid, displaying, on a connection page of the Bluetooth hearing aid, the left-ear icon or the right-ear icon corresponding to the Bluetooth hearing aid.

9. The method according to any one of claims 6 to 8, wherein the connecting the Bluetooth hearing aid comprises:
if the Bluetooth hearing aid is paired in advance, directly connecting the Bluetooth hearing aid;
or,
if the Bluetooth hearing aid is not paired in advance, displaying an icon of the Bluetooth hearing aid on the search page; and
after receiving a connection operation for the search page, connecting the Bluetooth hearing aid.

10. A method for connecting a Bluetooth hearing aid, applied to an electronic device, comprising:
receiving a Bluetooth low power BLE broadcast packet sent by a peripheral device, wherein the BLE broadcast packet comprises a notification packet;
if the notification packet does not comprise first information and second information, matching an address of the peripheral device with an address of the Bluetooth hearing aid comprised in historical connection information; and
if the address of the peripheral device is matched with the address of the Bluetooth hearing aid comprised in the historical connection information, connecting the peripheral device.

11. The method according to claim 10, wherein the matching an address of the peripheral device with an address of the Bluetooth hearing aid comprised in historical connection information comprises:
determining target connection information in the historical connection information, wherein a difference between a time point corresponding to the target connection information and a time point when receiving the BLE broadcast packet is in a preset range; and
matching the address of the peripheral device with the address of the Bluetooth hearing aid comprised in the target connection information.

12. The method according to claim 10 or 11, wherein after the matching an address of the peripheral device with an address of the Bluetooth hearing aid comprised in historical connection information, further comprising:
if the address of the peripheral device is matched with the address of the Bluetooth hearing aid comprised in the historical connection information and the BLE broadcast packet further comprises a scan response frame, determining, based on a left-ear identifier or a right-ear identifier comprised in the scan response frame, a left ear or a right ear corresponding to the Bluetooth hearing aid; and
after connecting the Bluetooth hearing aid, displaying, on a connection page of the Bluetooth hearing aid, the left-ear icon or the right-ear icon corresponding to the Bluetooth hearing aid.

13. A method for connecting a Bluetooth hearing aid, applied to an electronic device, comprising:
receiving a Bluetooth low power BLE broadcast packet sent by a peripheral device, wherein the BLE broadcast packet comprises a notification packet and a scan response frame;
determining a device type of the peripheral device based on first information comprised in the notification packet, wherein the first information is configured to indicate the device type;
if the notification packet does not comprise second information and the device type of the peripheral device is a Bluetooth hearing aid, determining a left ear or a right ear of the Bluetooth hearing aid based on a left-ear identifier or a right-ear identifier comprised in the scan response frame, wherein the second information is configured to indicate the left-ear identifier or the right-ear identifier; and
connecting the Bluetooth hearing aid, and displaying, on a connection page of the Bluetooth hearing aid, the left-ear icon or the right-ear icon corresponding to the Bluetooth hearing aid.

14. A method for connecting a Bluetooth hearing aid, applied to an electronic device, comprising:
receiving a Bluetooth low power BLE broadcast packet sent by a peripheral device, wherein the BLE broadcast packet comprises a notification packet and a scan response frame;
if a notification packet does not comprise first information and second information, after determining, based on third information in a scan response frame, that the peripheral device is a Bluetooth hearing aid, connecting the Bluetooth hearing aid, wherein the first information and the second information are respectively configured to indicate the device type and a left-ear identifier or a right-ear identifier, the third information is at least one piece of information indicating the device type and information indicating the left-ear identifier or the right-ear identifier;
if a scan response frame does not comprise third information, after determining, based on fourth information, that a peripheral device is a Bluetooth hearing aid, connecting the Bluetooth hearing aid, wherein the fourth information is located in a notification packet and/or the scan response frame and configured to indicate a service supported by the peripheral device;
if neither a notification packet nor a scan response frame comprises fourth information, after determining, based on a device name indicated by a BLE broadcast packet, that a peripheral device is a Bluetooth hearing aid, connecting the Bluetooth hearing aid; or
if a BLE broadcast packet does not comprise a device name, after determining that an address of a peripheral device is matched with an address of a Bluetooth hearing aid comprised in historical connection information, connecting the peripheral device.

15. The method according to claim 14, further comprising:
determining, based on a left-ear identifier or a right-ear identifier comprised in the scan response frame, a left ear or a right ear corresponding to the Bluetooth hearing aid; and
displaying, on a search page and/or a connection page of the Bluetooth hearing aid, the left-ear icon or the right-ear icon corresponding to the Bluetooth hearing aid.

16. An electronic device, comprising:
a receiving module, a device recognition module, and a connection module;
the receiving module is configured to receive a Bluetooth low power BLE broadcast packet sent by a peripheral device, wherein the BLE broadcast packet comprises a notification packet and a scan response frame;
if the notification packet does not comprise first information and second information, the device recognition module is configured to determine a device type of the peripheral device based on third information in the scan response frame or fourth information, wherein the first information and the second information are respectively configured to indicate the device type and a left-ear identifier or a right-ear identifier, the third information is at least one piece of information indicating the device type and information indicating the left-ear identifier or the right-ear identifier, and the fourth information is located in the notification packet and/or the scan response frame and configured to indicate a service supported by the peripheral device; and
if the device type of the peripheral device is a Bluetooth hearing aid, the connection module is configured to connect the Bluetooth hearing aid.

17. An electronic device, comprising:
a receiving module, a device recognition module, and a connection module;
the receiving module is configured to receive a Bluetooth low power BLE broadcast packet sent by a peripheral device, wherein the BLE broadcast packet comprises a notification packet;
if the notification packet does not comprise first information and second information, the device recognition module is configured to determine a device type of the peripheral device based on a device name indicated by the BLE broadcast packet, wherein the first information and the second information are respectively configured to indicate the device type and a left-ear identifier or a right-ear identifier; and
if the device type of the peripheral device is a Bluetooth hearing aid, the connection module is configured to connect the Bluetooth hearing aid.

18. An electronic device, comprising:
a receiving module, a device recognition module, and a connection module;
the receiving module is configured to receive a Bluetooth low power BLE broadcast packet sent by a peripheral device, wherein the BLE broadcast packet comprises a notification packet;
if the notification packet does not comprise first information and second information, the device recognition module is configured to match an address of the peripheral device with an address of a Bluetooth hearing aid comprised in historical connection information; and
if a device type of the peripheral device is the Bluetooth hearing aid, the connection module is configured to connect the Bluetooth hearing aid.

19. An electronic device, comprising:
a receiving module, a device recognition module, and a connection module;
the receiving module is configured to receive a Bluetooth low power BLE broadcast packet sent by a peripheral device, wherein the BLE broadcast packet comprises a notification packet and a scan response frame;
the device recognition module is configured to determine a device type of the peripheral device based on first information comprised in the notification packet, and the first information is configured to indicate the device type;
if the notification packet does not comprise second information and the device type of the peripheral device is a Bluetooth hearing aid, the device recognition module is further configured to determine a left ear or a right ear of the Bluetooth hearing aid based on a left-ear identifier or a right-ear identifier comprised in the scan response frame, and the second information is configured to indicate the left-ear identifier or the right-ear identifier; and
the connection module is configured to connect the Bluetooth hearing aid, and display, on a connection page of the Bluetooth hearing aid, the left-ear icon or the right-ear icon corresponding to the Bluetooth hearing aid.

20. An electronic device, comprising:
a receiving module, a device recognition module, and a connection module;
the receiving module is configured to receive a Bluetooth low power BLE broadcast packet sent by a peripheral device, wherein the BLE broadcast packet comprises a notification packet and a scan response frame; and
if the notification packet does not comprise first information and second information, after the device recognition module determines that the peripheral device is a Bluetooth hearing aid based on third information in the scan response frame, the connection module is configured to connect the Bluetooth hearing aid, wherein the first information and the second information are respectively configured to indicate a device type and a left-ear identifier or a right-ear identifier, and the third information is at least one piece of information indicating the device type and information indicating the left-ear identifier or the right-ear identifier;
if the scan response frame does not comprise third information, after the device recognition module determines that the peripheral device is a Bluetooth hearing aid based on fourth information, the connection module is configured to connect the Bluetooth hearing aid, and the fourth information is located in the notification packet and/or the scan response frame and configured to indicate a service supported by the peripheral device;
if neither the notification packet nor the scan response frame comprises fourth information, after the device recognition module determines that the peripheral device is a Bluetooth hearing aid based on a device name indicated by the BLE broadcast packet, the connection module is configured to connect the Bluetooth hearing aid; or
if the BLE broadcast packet does not comprise a device name, after the device recognition module determines that an address of the peripheral device is matched with an address of a Bluetooth hearing aid comprised in historical connection information, the connection module is configured to connect the peripheral device.

21. A computer storage medium, wherein the computer storage medium stores a computer program or instructions, and when the computer program or the instructions are executed, the method according to any one of claims 1 to 15 is performed.

22. A chip system, comprising a processor, wherein the processor is coupled to a memory and configured to execute a computer program or instructions stored in the memory, and when the computer program or the instructions are executed, the method according to any one of claims 1 to 15 is performed.
